(19)

Europäisches
Patentamt
European
Patent Office
Office européen
des brevets

(11) **EP 4 501 516 A1**

(12) **EUROPEAN PATENT APPLICATION**
published in accordance with Art. 153(4) EPC

(43) Date of publication:
**05.02.2025 Bulletin 2025/06**

(21) Application number: **23774861.1**

(22) Date of filing: **20.03.2023**

(51) International Patent Classification (IPC):
*B23K 11/14* (2006.01)      *B23K 11/00* (2006.01)
*B23K 11/16* (2006.01)      *B23K 11/24* (2006.01)
*B23K 11/36* (2006.01)      *C21D 9/50* (2006.01)
*C22C 21/02* (2006.01)      *C22C 38/00* (2006.01)
*C22C 38/04* (2006.01)      *F16B 35/04* (2006.01)
*F16B 37/06* (2006.01)

(52) Cooperative Patent Classification (CPC):
**B23K 11/00; B23K 11/14; B23K 11/16; B23K 11/24;
B23K 11/36; C21D 9/50; C22C 21/02; C22C 38/00;
C22C 38/04; F16B 35/04; F16B 37/06**

(86) International application number:
**PCT/JP2023/010853**

(87) International publication number:
**WO 2023/182266 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **25.03.2022   JP 2022050325
16.12.2022   JP 2022201153**

(71) Applicant: **NIPPON STEEL CORPORATION
Chiyoda-ku
Tokyo 100-8071 (JP)**

(72) Inventors:
• **YASUYAMA, Masanori**
**Tokyo 100-8071 (JP)**
• **NAITO, Yasuaki**
**Tokyo 100-8071 (JP)**
• **IMAMURA, Takashi**
**Tokyo 100-8071 (JP)**
• **TOKUNAGA, Masatoshi**
**Tokyo 100-8071 (JP)**
• **SHIMADA, Naoaki**
**Tokyo 100-8071 (JP)**

(74) Representative: **Vossius & Partner
Patentanwälte Rechtsanwälte mbB
Siebertstrasse 3
81675 München (DE)**

(54)    **PROJECTION WELD JOINT MANUFACTURING METHOD, PROJECTION WELD JOINT, AND
AUTOMOBILE COMPONENT**

(57)    A method for manufacturing a projection weld
joint according to the present disclosure includes: pressing a projection portion of a steel member having the
projection portion on a plane onto a surface of a hot-
stamping steel sheet, wherein the hot-stamping steel
sheet has an Al-based plating layer on the surface and
has a tensile strength of 1.5 GPa or more; applying first
energization to the hot-stamping steel sheet, the projection portion, and the steel member to make the projection
portion serve as a projection weld; quenching the projection weld; and applying second energization to the
quenched projection weld to temper edges of the projection weld while keeping a central part of the projection
weld quenched.

FIG. 1B

**EP 4 501 516 A1**

**Description**

Technical Field of the Invention

The present invention relates to a method for manufacturing a projection weld joint, a projection weld joint, and a vehicle component.

Priority is claimed on Japanese Patent Application No. 2022-050325, filed March 25, 2022 and Japanese Patent Application No. 2022-201153, filed December 16, 2022, the contents of which are incorporated herein by reference.

Related Art

**In** recent years, in the field of automobiles, there has been an increasing need to use a high-strength steel sheet for a vehicle body, a component, and the like in order to reduce the weight of the vehicle body and improve collision safety for the purpose of reducing fuel consumption and carbon dioxide emission. **In** particular, adoption of a steel sheet having a tensile strength of 1.5 GPa or more has been increasingly studied.

Such a steel sheet is subjected to hot stamping to form a mechanical part. The hot stamping of a steel sheet is a method in which the steel sheet is first heated to a temperature equal to or higher than a quenching temperature, then the steel sheet is subjected to press forming while keeping it at a high temperature, and further, the steel sheet is quenched to cause quenching and hardening. Hereinafter, the steel sheet subjected to hot stamping is referred to as a "hot-stamping steel sheet". A steel sheet for hot stamping before it has been hot-stamping is referred to as a "hot-stamping original sheet".

For example, in a vehicle structural member such as a frontside member, a center pillar, or a hinge reinforcement, a constitution in which a steel part such as a nut is welded to a part made of a high-strength steel sheet is adopted. In manufacturing a vehicle structural member to which steel parts are joined, a method of joining a nut to a surface of a high-strength steel sheet using a projection welding method is generally adopted. Projection welding is resistance welding in which a projection formed at a welded portion of one base metal is brought into contact with a welded portion of another base metal to pass a current, and generation of resistance heat is limited to a relatively small specific portion. When a nut is projection welded to a steel sheet, a nut provided with a plurality of projections is pressurized against the steel sheet, and these projections are energized to locally heat a contact interface between each projection and the steel sheet, thereby causing melting and solidification or solid-phase joining. A region formed by joining the nut and the steel sheet is referred to as a joint portion in the following description.

One of the characteristics required for a vehicle structural member obtained by projection welding includes delayed fracture resistance property. Delayed fracture is a phenomenon in which a high-strength steel part is suddenly brittlely fractured with almost no apparent plastic deformation after a certain period of time in a state where the high-strength steel part is subjected to a static applied stress. The delayed fracture resistance property of the joint portion of the steel material is considered to be affected by (1) hardness of the joint portion and a heat-affected zone generated around the joint portion, (2) hydrogen concentration of the joint portion, and (3) stress applied to the joint portion. In general, as these values (1) to (3) become larger, delayed fracture is more likely to occur. On the other hand, if even one of these factors (1) to (3) can be suppressed, delayed fracture can be suppressed.

In the technical field of projection weld joints, various attempts have been made to improve delayed fracture resistance property.

Patent Document 1 discloses a vehicle structural member obtained by providing a high-strength steel sheet having a tensile strength before welding of 1100 MPa or more with a piercing hole, and joining the high-strength steel sheet and a welding nut or a welding bolt by projection welding in which energization heating is performed while applying pressure in a state in which the center of the piercing hole and the center of a screw portion of the welding nut or the welding bolt substantially coincide with each other, in which the welding nut or the welding bolt has a flange section whose lower surface side is a joining surface with the high-strength steel sheet, and a substantially hemispherical projection portion is provided on the joining surface, and further, when the center on a semi-circular chord formed by intersecting a substantially hemispherical arc of the projection portion and the joining surface is C and the radius of the projection portion is R (mm) on a longitudinal surface of the flange section, a recessed part is provided within a range of a distance from the center C to 3R, the recessed part is locally provided on an upper surface of the flange section on a side opposite to the joining surface to substantially coincide at a position corresponding to the projection portion, and a total volume of the recessed part is in a range of 0.7 to 1.3 times a total volume of the projection portion, the vehicle structural member having excellent delayed fracture properties and static strength properties of a weld.

Patent Document 2 discloses a vehicle structural member having a welding nut portion obtained by providing a high-strength steel sheet having a tensile strength before welding of 1100 MPa or more with a piercing hole, and joining the high-strength steel sheet and the welding nut by projection welding in which energization heating is performed while pressurizing the high-strength steel sheet and the welding nut in a state in which the center of the piercing hole and the center of a screw hole of the welding nut substantially coincide with each other, in which the welding nut is provided with a substantially hemispherical projection portion on a joining surface with the high-strength steel sheet, and a relationship between a depth H1 in a sheet thickness direction of a weld heat-affected zone made to appear using a metal flow corrosive liquid in the high-strength steel sheet and a sheet thickness H2 of the high-strength steel sheet satisfies the equation {H1/H2 = 0.05 to 0.5 }.

Patent Document 3 discloses a method for manufacturing a projection weld joint in which, when projection welding is performed between a nut having a predetermined composition and a high-strength steel sheet having a tensile strength of 750 to 1600 MPa, a sheet thickness of 0.8 to 3.0 mm and a carbon equivalent Ceq of 0.22 to 0.50%, post energizing is performed at a post energizing current POC1 and a post energizing time POt1 immediately after main energizing is performed at a pressurizing force EF and an energizing time Wt of an electrode, and then the electrode is held for an electrode holding time Ht, so that a ratio of an area SJ of a joint portion between the nut and the high-strength steel sheet to an area SR of a nominal diameter portion of the nut satisfies a relationship represented by the equation {$0.7 \leq$ SJ/SR $\leq 1.5$}, and a maximum value of Vickers hardnesses of the joint portion and a heat-affected zone is controlled to be 550 Hv or less.

Patent Document 4 discloses a projection weld joint formed by projection welding a nut (or bolt) having a predetermined composition and a high-strength steel sheet having a tensile strength of 750 to 1600 MPa, a sheet thickness of 0.8 to 3.0 mm, and a carbon equivalent Ceq represented by the equation {[C] + [Si]/30 + [Mn]/20 + 2 [P] + 4 [S]} in a range of 0.22 to 0.50%, in which a ratio of an area SJ of a joint portion A between the nut (or bolt) and the high-strength steel sheet to an area SR of a nominal diameter portion of the nut (or bolt) satisfies a relationship represented by the equation {$0.7 \leq$ SJ/SR $\leq 1.5$}, and a maximum value of Vickers hardnesses of the joint portion and a heat-affected zone is 550 Hv or less.

Patent Document 5 discloses a projection welding method including: a preparation step of preparing a steel-based first workpiece having a plate-shaped portion formed in a sheet shape and a steel-based second workpiece having a plurality of projections; a first energization operation of energizing between the first workpiece and the second workpiece under conditions of a welding current I1 and an energizing time T1 while performing a pressurization operation of pressurizing at least one of the first workpiece and the second workpiece to pressurize the projection of the second workpiece against the plate-shaped portion of the first workpiece; and then a second energization operation of energizing between the first workpiece and the second workpiece under conditions of a welding current I2 and an energizing time T2, in which the welding current I1 of the first energization operation is smaller than the welding current I2 of the second energization operation, and the energizing time T1 in the first energization operation is set shorter than the energizing time T2 in the second energization operation.

In addition, hot stamping may be performed after Al-based plating is formed on the surface of the steel sheet. This makes it possible to suppress scale generation on a surface of the steel sheet upon heating for hot stamping. However, for example, as reported in Non-Patent Document 1, when an Al-based plated steel sheet is heated, hydrogen penetrates through the Al-based plating from a heating environment such as a furnace and enters the steel sheet. Hydrogen is one factor that causes delayed fracture.

Citation List

Patent Document

Patent Document 1: Japanese Patent No. 5626025
Patent Document 2: Japanese Patent No. 5613521
Patent Document 3: Japanese Unexamined Patent Application, First Publication No. 2013-078784
Patent Document 4: Japanese Unexamined Patent Application, First Publication No. 2012-157900
Patent Document 5: Japanese Unexamined Patent Application, First Publication No. 2004-050280

Non-Patent Document

Non-Patent Literature 1: "Absorption/Desorption of Diffusible Hydrogen in Aluminized Boron Steel", Cedric GEORGES et al., ISIJ International, Vol. 53 (2013), No. 8, pp. 1295-1304

Summary of Invention

Problems to be Solved by the Invention

When a steel sheet having a tensile strength of 1.5 GPa or more and having an Al-based plating formed on a surface thereof is subjected to hot stamping, all of the above-described delayed fracture factors (1) to (3) are significantly included in a joint portion during projection welding.

First, since an Al-based plated hot-stamping steel sheet having a tensile strength of 1.5 GPa or more has an extremely high tensile strength, a joint portion formed in the Al-based plated hot-stamping steel sheet and a peripheral portion thereof have the delayed fracture factor (1) described above.

In addition, when the Al-based plated hot-stamping original sheet is heated using a heating furnace whose atmosphere is not controlled, hydrogen penetrates the molten Al-based plating from the heated atmosphere, and enters the base steel sheet of the Al-based plated hot-stamping original sheet. Therefore, the base metal of the Al-based plated hot-stamping steel sheet has a high hydrogen concentration of, for example, 0.3 ppm or more immediately after hot stamping. Hydrogen that has entered the base steel sheet is released to the outside of the Al plating over time. However, since a diffusion rate of hydrogen in Al-based plating is low, it takes a long time to reduce the hydrogen concentration of the base steel sheet of the Al-based plated hot-stamping steel sheet. Therefore, the joint portion formed on the Al-based plated hot-stamping steel sheet and the peripheral portion thereof also have the delayed fracture factor (2) described above.

Furthermore, high residual stress is generated at the joint portion of the projection weld joint. In projection welding, for example, using an electrode capable of pressurization and energization, such as a spot-welding electrode, energization heating is performed while strongly pressing a steel member against a steel sheet to form a joint portion, and then the electrode is released. Distortion due to thermal strain is introduced into the joint portion and its periphery after electric heating, thereby generating residual stress. Further, even when the electrode pressurizing the steel sheet and the steel member is released, strain is introduced into the joint portion and the periphery thereof, and residual stress is generated. Therefore, the joint portion of the projection weld joint including the Al-based plated hot-stamping steel sheet and the peripheral portion thereof also have the delayed fracture factor (3) described above.

For the above reasons, for projection welding of an Al-based plated hot-stamping steel sheet having a tensile strength of 1.5 GPa or more, delayed fracture is very likely to occur at a joint portion and a peripheral portion thereof. However, it is very rare that an Al-based plated hot-stamping steel sheet having a tensile strength of 1.5 GPa or more is used as a material of a projection weld joint. Therefore, the problems described above are not known to those skilled in the art at the present time, and therefore, there has been no research to solve these problems.

In the techniques of Patent Documents 1 and 2, the stress applied to the joint portion is reduced by optimizing the shape of the nut to be joined to the steel sheet. In the technique of Patent Document 5, variations in welding strength among a plurality of projections are reduced by optimizing welding conditions. However, it is estimated that the joint portion obtained by these techniques has high hardness. From the viewpoint of steel material strength, which is one factor of delayed fracture, there remains room for further improving delayed fracture resistance property.

The techniques of Patent Documents 3 and 4 attempt to improve delayed fracture resistance property by optimizing welding conditions. However, these techniques are not intended for high-strength steel sheets having a tensile strength of 1.5 GPa or more.

In view of the above circumstances, an object of the present disclosure is to provide a method for manufacturing a projection weld joint which is composed of an Al-based hot-stamping steel sheet having a tensile strength of 1.5 GPa or more and excellent delayed fracture resistance property, a projection weld joint, and a vehicle component. Means for Solving the Problem

The gist of the present disclosure is as follows.

(1) A method for manufacturing a projection weld joint according to the present disclosure includes: pressing a projection portion of a steel member having the projection portion on a plane onto a surface of a hot-stamping steel sheet, in which the hot-stamping steel sheet has an Al-based plating layer on the surface and has a tensile strength of 1.5 GPa or more; applying first energization to the hot-stamping steel sheet, the projection portion, and the steel member to make the projection portion serve as a projection weld; quenching the projection weld; and applying second energization to the quenched projection weld to temper edges of the projection weld while keeping a central part of the projection weld quenched.

(2) Preferably, in the method for manufacturing a projection weld joint according to (1), in a cross section in a sheet thickness direction of the hot-stamping steel sheet, the cross section passing through a center of the tempered projection weld and a centroid of the plane, a maximum value of hardness at a portion having a depth of 0.3 mm from the surface of the hot-stamping steel sheet in a region up to 0.5 mm from an end portion away from the centroid of the plane of the projection weld toward the center of the projection weld is less than 95% of Hm in Equation 1, and a maximum value of hardness at a portion having a depth of 0.3 mm from the surface of the hot-stamping steel sheet of the projection weld is larger than 95% of Hm in Equation 1:

$$Hm = 884 \times [C] \times (1 - 0.3 \times [C]^2) + 294 : \text{Equation 1}$$

(3) Preferably, in the method for manufacturing a projection weld joint according to (1) or (2), a tensile strength of the hot-stamping steel sheet is 2.0 GPa or more, and in a cross section in a sheet thickness direction of the hot-stamping steel sheet, the cross section passing through the center of the tempered projection weld and the centroid of the plane, a maximum value of hardness at a portion having a depth of 0.3 mm from the surface of the hot-stamping steel sheet in a region up to 0.3 mm from an end portion away from the centroid of the plane of the projection weld toward the center of the projection weld is less than 95% of Hm in Equation 1, and a maximum value of hardness at a portion having a depth of 0.3 mm from the surface of the hot-stamping steel sheet of the projection weld is larger than 95% of Hm in Equation 1.

(4) Preferably, in the method for manufacturing a projection weld joint according to any one of (1) to (3), the first energization is applied to the hot-stamping steel sheet having a hydrogen concentration of 0.3 ppm or more, the projection portion, and the steel member.

(5) Preferably, in the method for manufacturing a projection weld joint according to any one of (1) to (4), the hot-stamping steel sheet has a sheet thickness of 1.2 mm to 3.6 mm, a time from an end of the first energization to a start of the second energization is 332 msec or more, and a product I2 × t2 of average current value I2 and energizing time t2 of the second energization is 0.5 times or more a product I1 × t1 of average current value I1 and energizing time t1 in the first energization.

(6) Preferably, in the method for manufacturing a projection weld joint according to any one of (1) to (5), the hot-stamping steel sheet includes a first steel sheet, a second steel sheet, and a spot-welding portion joining the first steel sheet and the second steel sheet, and a sheet thickness of the hot-stamping steel sheet is 0.8 to 2.3 mm.

(7) Preferably, in the method for manufacturing a projection weld joint according to any one of (1) to (6), third energization is applied to the hot-stamping steel sheet, the projection portion, and the steel member at a current value less than a current value at a start point of the first energization, and then the first energization is applied.

(8) Preferably, in the method for manufacturing a projection weld joint according to any one of (1) to (7), a chemical composition of a base steel sheet of the hot-stamping steel sheet contains, by mass%,

C: 0.05 to 0.70%,
Si: 2.00% or less,
Mn: 0.05 to 5.00%,
P: 0.100% or less,
S: 0.0100% or less, and
a carbon equivalent Ceq calculated by the following Equation 2 is 0.20 to 0.65 mass%:

$$Ceq = [C] + [Si]/30 + [Mn]/20 + 2 \times [P] + 4 \times [S]: \text{Equation 2}$$

Here, the element symbol included in Equation 2 is the content of each element included in the base steel sheet.
(9) A projection weld joint according to the present disclosure includes: a hot-stamping steel sheet including an Al-based plating layer on a surface and having a tensile strength of 1.5 GPa or more; a steel member including a plane; and a projection weld that joins the plane and the surface, in which, in a cross section in a sheet thickness direction of the hot-stamping steel sheet, the cross section passing through a center of the projection weld and a centroid of the plane, a hardness at a portion having a depth of 0.3 mm from the surface of the hot-stamping steel sheet at an end portion away from the centroid of the plane of the projection weld is less than 95% of Hm in Equation 1, and a maximum value of hardness at a portion having a depth of 0.3 mm from the surface of the hot-stamping steel sheet of the projection weld is larger than 95% of Hm in Equation 1:

$$Hm = 884 \times [C] \times (1 - 0.3 \times [C]^2) + 294: \text{Equation 1}$$

(10) Preferably, in the projection weld joint according to (9), in a cross section in a sheet thickness direction of the hot-stamping steel sheet, the cross section passing through the center of the projection weld and the centroid of the plane, a maximum value of hardness at a portion having a depth of 0.3 mm from the surface of the hot-stamping steel sheet in a region up to 0.5 mm from an end portion away from the centroid of the plane of the projection weld toward the center of the projection weld is less than 95% of Hm in Equation 1.

(11) Preferably, in the projection weld joint according to (9) or (10), the hot-stamping steel sheet has a tensile strength of 2.0 GPa or more, and

in a cross section in a sheet thickness direction of the hot-stamping steel sheet, the cross section passing through the center of the projection weld and the centroid of the plane, a maximum value of hardness at a portion having a depth of 0.3 mm from the surface of the hot-stamping steel sheet in a region up to 0.3 mm from an end portion away from the centroid of the plane of the projection weld toward the center of the projection weld is less than 95% of Hm in Equation 1.

(12) Preferably, in the projection weld joint according to any one of (9) to (11), in a cross section in a sheet thickness direction of the hot-stamping steel sheet, the cross section passing through the center of the projection weld and the centroid of the plane, a maximum value of hardness at a portion having a depth of 0.3 mm from the surface of the hot-stamping steel sheet in a region up to 0.5 mm from an end portion away from the centroid of the plane of the projection weld toward the center of the projection weld is less than 85% of Hm in Equation 1.

(13) Preferably, in the projection weld joint according to any one of (9) to (12), the hot-stamping steel sheet has a tensile strength of 2.0 GPa or more, and

in a cross section in a sheet thickness direction of the hot-stamping steel sheet, the cross section passing through the center of the projection weld and the centroid of the plane, a maximum value of hardness at a portion having a depth of 0.3 mm from the surface of the hot-stamping steel sheet in a region up to 0.3 mm from an end portion away from the centroid of the plane of the projection weld toward the center of the projection weld is less than 85% of Hm in Equation 1.

(14) A vehicle component according to the present disclosure includes the projection weld joint according to any one of (9) to (13).

(Supplement)

(a) Preferably, a method for manufacturing a projection weld joint according to the present disclosure includes a first energizing step of energizing an Al-based plated hot-stamping steel sheet and a steel member to form a plurality of joint portions by projection welding the steel member that is a nut, a bolt, or a rivet having a plurality of projections to a first surface of an Al-based plated hot-stamping steel sheet, in which the Al-based plated hot-stamping steel sheet has a tensile strength of 1.5 GPa or more, and when, in a cross section passing through the center of the Al-based plated hot-stamping steel member and the center of the joint portion and perpendicular to the first surface of the steel sheet, a position farthest from the center of the steel member in the joint portion is defined as an end portion of the joint portion, and a region of the joint portion from the end portion to a position 0.5 mm away from the center of the steel member along the first surface of the Al-based plated hot-stamping steel sheet is defined as a first end region of the joint portion, the manufacturing method further including: a cooling step of quenching each of the plurality of joint portions; and a second energizing step of further energizing the Al-based plated hot-stamping steel sheet and the steel member to temper the first end region in each of the plurality of joint portions.

(b) Preferably, in the method for manufacturing a projection weld joint according to (a), when the tensile strength of the Al-based plated hot-stamping steel sheet is 2.0 GPa or more, and a region of the joint portion from the end portion along the first surface of the Al-based plated hot-stamping steel sheet to a position 0.3 mm away from the center of the steel member is defined as a second end region of the joint portion, the second end region is tempered in the second energizing step.

(c) Preferably, in the method for manufacturing a projection weld joint according to (a) or (b), a hydrogen concentration in the base steel sheet of the Al-based plated hot-stamping steel sheet is 0.3 ppm or more immediately before the first energizing step.

(d) Preferably, in the method for manufacturing a projection weld joint according to any one of (a) to (c), the Al-based plated hot-stamping steel sheet has a sheet thickness of 1.2 mm to 3.6 mm, the length of the cooling step may be 332 msec or more, and a product $I2 \times t2$ of average current value I2 and energizing time t2 in the second energizing step may be 0.5 times or more a product $I1 \times t1$ of average current value I1 and energizing time t1 in the first energizing step.

(e) Preferably, in the method for manufacturing a projection weld joint according to any one of (a) to (d), the Al-based plated hot-stamping steel sheet is a steel sheet disposed on a surface layer of a sheet assembly obtained by spot welding and then hot stamping two or more stacked hot-stamping original sheets each having a sheet thickness of 0.8 to 2.3 mm.

(f) Preferably, in the method for manufacturing a projection weld joint according to any one of (a) to (e), the method for manufacturing a projection weld joint may further include a pre-energizing step of energizing the Al-based plated hot-stamping steel sheet and the steel member with a current value less than the current value at a start point of the first energizing step before the first energizing step.

(g) Preferably, in the method for manufacturing a projection weld joint according to (a) to (f), a chemical composition of a base steel sheet of the Al-based plated hot-stamping steel sheet contains, by mass%,

C: 0.05 to 0.70%,

Si: 2.00% or less,
Mn: 0.05 to 5.00%,
P: 0.100% or less,
S: 0.0100% or less, and
a carbon equivalent Ceq calculated by the following Equation (i) is 0.20 to 0.65 mass%:

$$Ceq = [C] + [Si]/30 + [Mn]/20 + 2 \times [P] + 4 \times [S]: \text{Equation (i)}$$

Here, the element symbol included in Equation (i) is the content of each element included in the base steel sheet. (h) Preferably, a projection weld joint according to the present disclosure includes an Al-based plated hot-stamping steel sheet; a steel member that is a nut, a bolt, or a rivet; and a plurality of joint portions that join a first surface of the Al-based plated hot-stamping steel sheet and the steel member, in which the Al-based plated hot-stamping steel sheet has a tensile strength of 1.5 GPa or more, and when, in a cross section passing through the center of the steel member and the center of the joint portion and perpendicular to the first surface of the Al-based plated hot-stamping steel sheet, a position farthest from the center of the steel member in the joint portion is defined as an end portion of the joint portion, and a region of the joint portion from the end portion to a position 0.5 mm away from the center of the steel member along the first surface of the Al-based plated hot-stamping steel sheet is defined as a first end region of the joint portion, a maximum hardness Hedge of the first end region obtained by continuously measuring a Vickers hardness at a position 0.3 mm deep from the first surface in each of the plurality of joint portions satisfies a relationship of Equation (ii), and a maximum hardness Hmax of the joint portions obtained by continuously measuring a Vickers hardness at a position 0.3 mm deep from the first surface in each of the plurality of joint portions satisfies a relationship of Equation (iii).

$$Hedge < 0.95 \times Hm: \text{Equation (ii)}$$

$$Hmax > 0.95 \times Hm: \text{Equation (iii)}$$

Here, the symbol Hm included in Equations (ii) and (iii) is a value calculated by Equation (iv).

$$Hm = 884 \times [C] \times (1 - 0.3 \times [C]^2) + 294: \text{Equation (iv)}$$

Here, the element symbol included in Equation (iv) is the content of each element included in the Al-based plated hot-stamping steel sheet.

(i) Preferably, in the projection weld joint according to (h), when the tensile strength of the Al-based plated hot-stamping steel sheet is 2.0 GPa or more, and a region of the joint portion from the end portion along the first surface of the Al-based plated hot-stamping steel sheet to a position 0.3 mm away from the center of the steel member is defined as a second end region of the joint portion, a maximum hardness Hedge of the second end region satisfies the relationship of Equation (ii).
(j) Preferably, in the projection weld joint according to (h) or (i), the maximum hardness Hedge of the first end region may satisfy a relationship of Equation (ii') in each of the plurality of joint portions.

$$Hedge < 0.85 \times Hm: \text{Equation (ii')}$$

(k) Preferably, in the projection weld joint according to (i), the maximum hardness Hedge of the second end region may satisfy a relationship of Equation (ii') in each of the plurality of joint portions.

$$Hedge < 0.85 \times Hm: \text{Equation (ii')}$$

(l) Preferably, a vehicle component according to the present disclosure includes the projection weld joint according to any one of (h) to (k).

Effects of the Invention

According to the present disclosure, it is possible to provide a method for manufacturing a projection weld joint which is composed of an Al-based hot-stamping steel sheet having a tensile strength of 1.5 GPa or more and excellent delayed fracture resistance property, a projection weld joint, and a vehicle component.

Brief Description of the Drawings

FIG. 1A is a schematic cross-sectional view showing a state before a first energizing step in a method for manufacturing a projection weld joint according to the present embodiment.
FIG. 1B is a schematic cross-sectional view showing a state after a second energizing step in the method for manufacturing a projection weld joint according to the present embodiment.
FIG. 1C is an enlarged cross-sectional view showing a first end region and a second end region of the joint portion.
FIG. 2 is a plan view of a steel member.
FIG. 3 is a view explaining a method for measuring a maximum hardness Hedge of the first end region of the joint portion and a maximum hardness Hmax of the entire joint portion.
FIG. 4 is a view explaining a method for measuring a maximum hardness Hedge of the second end region of the joint portion and a maximum hardness Hmax of the entire joint portion.

Embodiments of the Invention

<Method for Manufacturing Projection Weld Joint>

Hereinafter, a method for manufacturing a projection weld joint according to the present embodiment will be described with reference to the drawings as appropriate.
The delayed fracture factors are (1) hardness of the joint portion and a heat-affected zone generated around the joint portion, (2) hydrogen concentration of the joint portion, and (3) stress applied to a joint portion 13. For projection welding of an Al-based plated hot-stamping steel sheet having a tensile strength of 1.5 GPa or more, the delayed fracture factors are likely to collectively occur in the joint portion 13. However, if even one of these factors can be suppressed, the delayed fracture resistance property can be improved. The present inventors have extensively conducted studies on alleviation of stress applied to the joint portion 13.
The stress in the joint portion 13 is considered to be caused by heat stress generated in a cooling process of the joint portion 13 formed by welding, strain generated in the joint portion 13 due to electrode opening, and the like. The present inventors have found that cracks are likely to occur at a specific portion when opening the electrode at which stress is introduced into the joint portion 13. Hereinafter, a part where cracks are likely to occur is referred to as a "dangerous part". Furthermore, the present inventors have found that the delayed fracture in a projection weld joint 1 can be extremely effectively suppressed by reducing the hardness of the dangerous part.
The method for manufacturing a projection weld joint according to the present disclosure, which is obtained based on the findings of the present inventors, includes:

(s1) pressing a projection portion 121 of a steel member 12 having the projection portion 121 on a plane 12a onto a surface 11a of a hot-stamping steel sheet 11, wherein the hot-stamping steel sheet 11 has an Al-based plating layer on the surface and has a tensile strength of 1.5 GPa or more;
(s2) applying first energization to the hot-stamping steel sheet 11, the projection portion 121, and the steel member 12 to make the projection portion 121 serve as a projection weld 13;
(s3) quenching the projection weld 13; and
(s4) applying second energization to the quenched projection weld 13 to temper edges of the projection weld 13 while keeping a central part of the projection weld 13 quenched. Preferably, in the method for manufacturing a projection weld joint according to the present embodiment, in a cross section in a sheet thickness direction of the hot-stamping steel sheet 11, the cross section passing through the center of the projection weld 13 tempered and the centroid of the plane 12a, a maximum value of hardness at a portion having a depth of 0.3 mm from the surface of the hot-stamping steel sheet 11 in a region up to 0.5 mm from an end portion 130 away from the centroid of the plane 12a of the projection weld 13 toward the center of the projection weld 13 is less than 95% of Hm in Equation 1, and a maximum value of hardness at a portion having a depth of 0.3 mm from the surface of the hot-stamping steel sheet 11 of the projection weld 13 is larger than 95% of Hm in Equation 1:

$$\mathrm{Hm} = 884 \times [\mathrm{C}] \times (1 - 0.3 \times [\mathrm{C}]^2) + 294 : \text{Equation 1}$$

Here, the element symbol included in Equation 1 is the content, by mass%, of each element included in the hot-stamping steel sheet 11.

Alternatively, the method for manufacturing a projection weld joint according to the present embodiment includes:

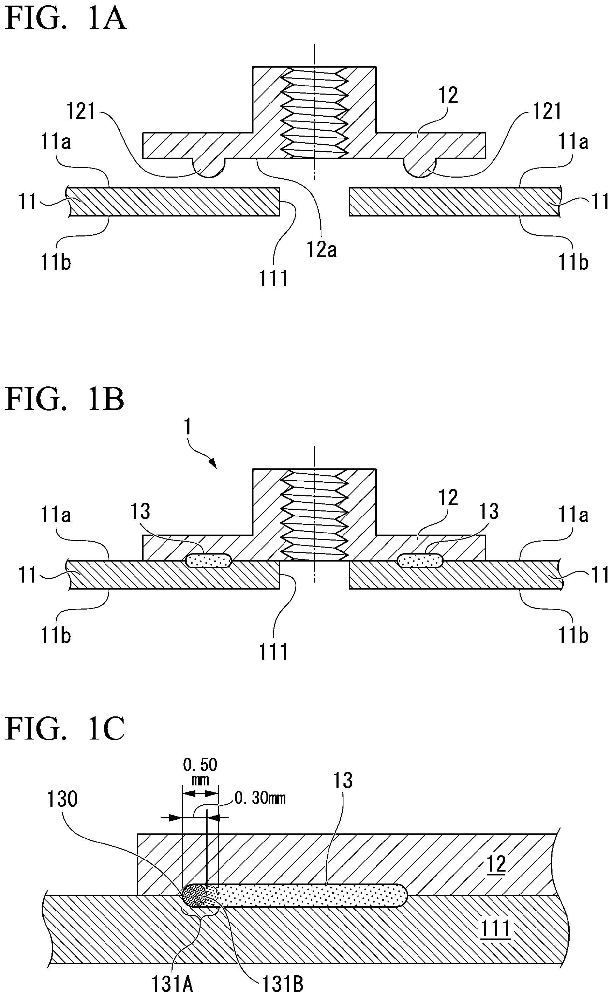

(S1) as shown in FIGS. 1A and 1B, a first energizing step of energizing the steel sheet **11** and the steel member 12 so as to form the plurality of joint portions 13 by projection welding the steel member 12 that is a nut, a bolt, or a rivet having the plurality of projection portions 121 to the first surface 11a of the Al-based plated hot-stamping steel sheet 11, and further includes:

(S2) a cooling step of quenching each of the plurality of joint portions 13 shown in FIG. 1C; and
(S2) a second energizing step of further energizing the Al-based plated hot-stamping steel sheet 11 and the steel member 12 so as to temper edges (preferably a first end region 131A) of each of the plurality of joint portions 13.

The first end region 131A is a region specified in a cross section passing through the center of the steel member 12 and the center of the joint portion 13 and perpendicular to the first surface 11a of the Al-based plated hot-stamping steel sheet 11. Specifically, in the cross section, a position farthest from the center of the steel member 12 in the joint portion 13 is defined as the end portion 130 of the joint portion 13. Then, a region of the joint portion 13 from the end portion 130 to a position 0.5 mm away from the center of the steel member 12 along the first surface 11a of the Al-based plated hot-stamping steel sheet 11 is defined as the first end region 131A of the joint portion 13. The first end region 131A corresponds to the above-described dangerous part.

Hereinafter, the manufacturing method according to the present embodiment will be described in detail. **In** the following description, the Al-based plated hot-stamping steel sheet 11 may be simply referred to as a "steel sheet 11".

(Steel Sheet 11)

The steel sheet 11 is an Al-based plated hot-stamping steel sheet having a tensile strength of 1.5 GPa or more. Here, the "hot-stamping steel sheet" means a steel sheet subjected to hot stamping, and is distinguished from the "hot-stamping original sheet". The "hot-stamping original sheet" refers to a steel sheet for hot stamping before being subjected to hot stamping. The "Al-based plated hot-stamping steel sheet" is a surface-treated steel sheet including a base steel sheet which is a hot-stamping steel sheet and an Al-based plating layer provided on the surface of the base steel sheet. Similarly, the "Al-based plated hot-stamping original sheet" is a surface-treated steel sheet including a base steel sheet which is a hot-stamping original sheet and an Al-based plating layer provided on the surface of the base steel sheet. The "base steel sheet" means a steel sheet to be a so-called plating base metal. In the technical field of welding, a "base metal" may refer to a portion other than a weld in a weld joint, that is, a material to be welded, but in the present embodiment, the material to be welded is described as a "welding base metal", which is distinguished from the "base steel sheet" described above.

When the tensile strength of the steel sheet 11 is 1.5 GPa or more, the projection weld joint 1 has extremely excellent static strength. The tensile strength of the steel sheet 11 may be 1.6 GPa or more, 1.7 GPa or more, 1.8 GPa or more, 2.0 GPa or more, 2.2 GPa or more, or 2.5 GPa or more.

The tensile strength of the steel sheet 11 is determined based on the Vickers hardness. Specifically, in the cross section along the sheet thickness direction of the steel sheet, the Vickers hardness at a position at a depth of 1/4 of the sheet thickness from the surface 11a of the steel sheet is measured, and then the hardness measurement is converted into the tensile strength using the conversion table shown in Table 1, thereby specifying the tensile strength. In the measurement of the Vickers hardness, a load is 500 g, and a time for applying the load to the indenter is 10 seconds. The number of measurement points is 5, and the average value of the Vickers hardness at these measurement points is regarded as the Vickers hardness of the steel sheet 11.

[Table 1]

| Tensile strength (GPa) | 1.5 | 1.6 | 1.7 | 1.8 | 2.0 | 2.2 | 2.5 |
|---|---|---|---|---|---|---|---|
| Vickers Hardness (Hv) | 450 | 476 | 498 | 523 | 575 | 624 | 698 |

If the Al-based plating layer is provided on the surface 11a of the steel sheet 11, an anticorrosion effect of the steel sheet 11 after hot stamping can be expected. When the Al-based plating layer is provided on the surface 11a of the steel sheet 11, scale generation on the surface of the steel sheet 11 can be suppressed during hot stamping. The Al-based plating is, for example, Al-10%Si plating. Alternatively, in the present disclosure, the Al-based plating layer is a plating layer in which an average value of Al content in a depth range of 10 $\mu$m from a surface 11a of a plating layer is 20 mass% or more. The Al-based plating layer may contain, for example, Fe or Si, in addition to Al.

In the method for manufacturing a projection weld joint according to the present embodiment, hereinafter, for convenience of description, out of two surfaces of the steel sheet 11, a surface to which the steel member 12 is welded is referred to as the first surface 11a, and a surface opposite thereto is referred to as a second surface 11b. However, the steel member 12 may be welded to both surfaces of the steel sheet 11. In this case, the first surface 11a and the second surface 11b of the steel sheet may be distinguished according to the above definition according to the steel member of interest.

A shape of the steel sheet 11 is not particularly limited. For example, the steel sheet 11 may be a flat sheet. On the other hand, as illustrated in FIGS. 1A and 1B, a through-hole 111 may be provided in the steel sheet 11. When the steel member 12 is a nut, a bolt can be attached to the projection weld joint 1 so as to penetrate the projection weld joint 1 by axially aligning the hole of the nut and the through-hole 111.

In the Al-based plated hot-stamping steel sheet used as the steel sheet 11, the chemical composition of the base steel sheet is not particularly limited. For example, the chemical composition of the base steel sheet may contain, by mass%, C: 0.05 to 0.70%, Si: 2.00% or less, Mn: 0.05 to 5.00%, P: 0.100% or less, and S: 0.0100% or less. In this case, the remainder of the chemical composition contains Fe and impurities.

The carbon equivalent Ceq calculated by the following Equation 2 may be 0.20 to 0.65 mass%. The steel sheet having such a chemical composition can be suitably used as a hot-stamping steel sheet.

$$Ceq = [C] + [Si]/30 + [Mn]/20 + 2 \times [P] + 4 \times [S]: \text{Equation 2}$$

The element symbol included in Equation 2 is the content of each element included in the base steel sheet, by mass%. The carbon equivalent Ceq is an index value of hardenability of the steel material. The higher the carbon equivalent Ceq, the larger the amount of increase in hardness of the steel material due to quenching. The steel sheet 11 may have a carbon equivalent Ceq of 0.32 mass% or more, 0.35 mass% or more, 0.38 mass% or more, 0.40 mass% or more, or 0.50 mass% or more. The steel sheet 11 may have a carbon equivalent Ceq of 0.60 mass% or less, 0.55 mass% or less, or 0.50 mass% or less.

It is preferable to apply first energization described later to the hot-stamping steel sheet 11 having a hydrogen concentration of 0.3 ppm or more, the projection portion 121, and the steel member 12. In other words, the hydrogen concentration may be 0.3 ppm or more in the base steel sheet of the Al-based plated hot-stamping steel sheet immediately before the first energizing step described later. The hydrogen of the base steel sheet is caused by hydrogen entering the base steel sheet from a heating atmosphere when the Al-based plated hot-stamping original sheet is heated for hot stamping. The hydrogen concentration of the base steel sheet gradually decreases with time after hot stamping is completed. Therefore, if a long standby period is provided between the end of hot stamping and the start of projection welding, there is a possibility that delayed fracture due to hydrogen can be reduced. However, according to this solution, a period required for manufacturing a component becomes extremely long. On the other hand, according to the method for manufacturing a projection weld joint according to the present embodiment, even when the Al-based plated hot-stamping steel sheet in which the hydrogen concentration of the base steel sheet is 0.3 ppm or more is used as the steel sheet 11, delayed fracture at the joint portion 13 and the periphery thereof can be suppressed. Accordingly, a time required for manufacturing a machine component can be shortened.

For the hydrogen concentration of the base steel sheet, the steel sheet was cooled to -10°C or lower and frozen immediately after the heat treatment, the temperature was raised at 100°C/hr in temperature-raising hydrogen analysis, the amount of diffusible hydrogen released up to 300°C was used to evaluate the amount of hydrogen entering (He).

Further, since hydrogen introduced upon heating in hot stamping is released from the base steel sheet over time, the hydrogen concentration of the base steel sheet changes over time. The hydrogen concentration of the base steel sheet immediately before the first energizing step means a period from about one day before the start of the first energizing step to the start of the first energizing step. However, it is not necessary to measure the hydrogen concentration of the base steel sheet to be welded immediately before the first energizing step. If the hydrogen concentration of a steel sheet of the same lot or a steel sheet manufactured under the same conditions is known, it is unnecessary to measure a steel sheet to be actually welded. This is because the behavior of the change over time of the hydrogen concentration of the base steel sheet is substantially the same under the same steel type and the same plating configuration. For example, when the hydrogen concentration of the base steel sheet is measured at random after hot stamping of the Al-based plated hot-stamping original sheet is completed and an Al-based plated hot-stamping steel sheet similar to that to be welded is obtained, the hydrogen concentration of the base steel sheet to be welded immediately before the first energizing step can be estimated based on the measurement data.

The thickness of the steel sheet 11 is also not particularly limited. For example, the sheet thickness of the steel sheet 11 is preferably within a range of 1.2 mm to 3.6 mm. In addition, various sheet thicknesses according to the types of components to which the projection weld joint 1 is attached can be applied to the steel sheet 11.

(Steel Member 12)

As illustrated in FIG. 1A, the steel member 12 includes the plane 12a and the plurality of projection portions 121 provided on the plane 12a. The projection portion 121 is pressurized against the steel sheet 11 during projection welding to form a current path. Then, the projection portion 121 concentrates current on a contact surface between the plurality of projection portions 121 and the steel sheet 11 to form the joint portion 13 that joins the steel member 12 and the steel sheet 11.

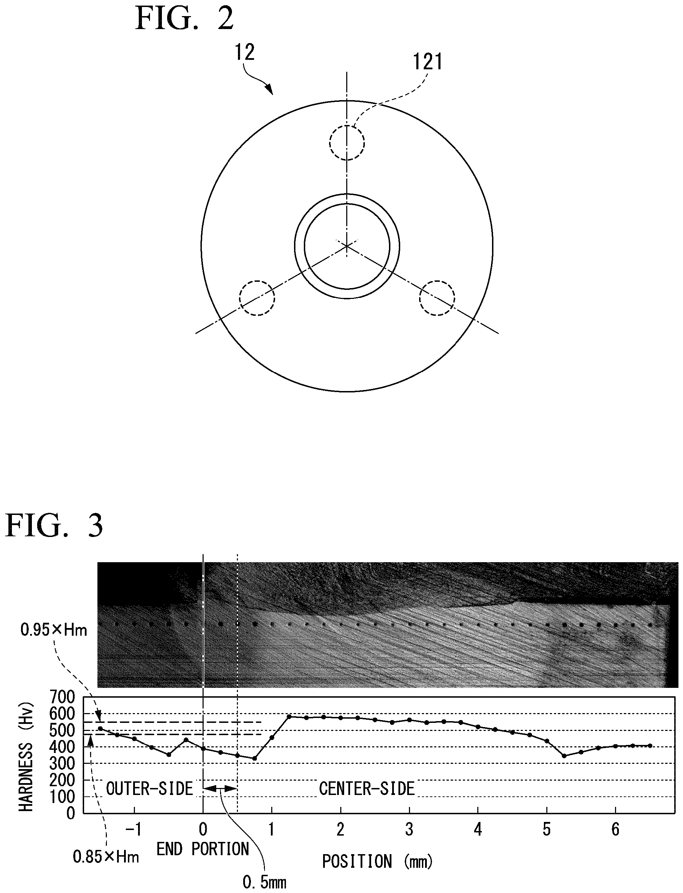

In order to reliably join the steel member 12 to the steel sheet 11, the number of projection portions 121 is set to 2 or more. For example, the number of projection portions 121 may be 3, 4, 5, or 6. As will be described later, from the viewpoint of uniformizing the contact state between each of the plurality of projection portions 121 and the steel sheet 11, the number of projection portions 121 is most preferably 3. The positions of the plurality of projection portions 121 are not particularly limited. From the viewpoint of uniformizing the contact state between each of the plurality of projection portions 121 and the steel sheet 11, as shown in FIG. 2, it is preferable that the plurality of projection portions 121 be disposed at positions rotationally symmetric with respect to the centroid of the steel member 12 when the steel member 12 is viewed in a plane view with respect to the joining surface.

A shape of the steel member 12 is not particularly limited. For example, when the projection weld joint 1 is used as a vehicle component, the steel member 12 is preferably a bolt, a nut, or a rivet. However, various shapes can be applied to the steel member 12 depending on the application of the projection weld joint 1. The strength, chemical composition, and the like of the steel member 12 are also not particularly limited. For example, the material of the steel member 12 may be S10C, S25C, or the like.

In the method for manufacturing a projection weld joint according to the present embodiment, a first energizing step of performing projection welding of the steel member 12 and the steel sheet 11, a cooling step of quenching the joint portion 13, and a second energizing step of tempering the joint portion 13 are performed. A device for performing a series of steps, particularly a first energizing step for projection welding, needs to have a function of pressurizing the steel member 12 toward the steel sheet 11 and a function of energizing the steel member 12 and the steel sheet 11. For example, a spot welding machine has a function of pressurizing and energizing an object to be welded using a pair of electrodes. Usually, the electrode of the spot welding device also has a function of cooling an object to be welded. Therefore, a preferred example of the projection welding device is a spot welding device.

(Pressing and First Energization)

In the method for manufacturing a projection weld joint according to the present embodiment, first, the projection portion 121 of the steel member 12 having the projection portion 121 on the plane 12a is pressed against the surface 11a of the hot-stamping steel sheet 11 having a tensile strength of 1.5 GPa or more and including the Al-based plating layer on the surface. Next, the hot-stamping steel sheet 11, the projection portion 121, and the steel member 12 are subjected to first energization, whereby the projection portion 121 is formed into the projection weld 13. In other words, the steel sheet 11 and the steel member 12 are subjected to the first energizing step so as to form the plurality of joint portions 13 by projection welding the steel member 12 having the plurality of projection portions 121 to the first surface 11a of the steel sheet 11. At the time of projection welding, energization is performed while pressurizing the steel sheet 11 and the steel member 12 so as to pressurize the plurality of projection portions 121 against the first surface 11a of the steel sheet 11. When the current concentrates on the contact surface between the projection portion 121 and the first surface 11a of the steel sheet 11, the temperature of the contact surface rises, and the joint portion 13, also known as the projection weld 13, is formed to join the steel sheet 11 and the steel member 12.

When the current value in the first energizing step is high, the contact surface between the first surface 11a of the steel sheet 11 and the projection portion 121 and the vicinity thereof are melted and solidified to form a weld metal at the joint portion 13. When the current value in the first energizing step is low, the contact surface and the vicinity thereof are not melted, and the joint portion 13 becomes a solid-phase joining surface. In the method for manufacturing a projection weld joint 1 according to the present embodiment, the joint portion 13 may be a weld metal or a solid-phase joining surface. Also, when the current value and/or the pressurizing force in the first energizing step are large and the projection portion 121 is small, as shown in FIG. 1B, the projection portion 121 may be crushed and disappear in the first energizing step. On the other hand, the projection portion 121 may remain after the first energizing step. In the method for manufacturing a projection weld joint 1 according to the present embodiment, the projection portion 121 may remain or may disappear after the first energizing step. For the above reasons, the energizing condition and the pressurization condition in the first energizing step are not particularly limited.

(Quenching)

In the method for manufacturing a projection weld joint according to the present embodiment, the projection weld

EP 4 501 516 A1

13 is quenched after the first energization. In other words, after the first energizing step, the plurality of joint portions 13 are cooled in order to quench the plurality of first end regions 131A in each of the plurality of joint portions 13. This cooling is referred to as a cooling step. The first end region 131A is a region up to a position 0.5 mm away from the end portion 130 of the joint portion 13 as described above with reference to FIG. 1C. The end portion 130 of the joint portion 13 is a position farthest from the center of the steel member 12 in the joint portion 13 in the cross section.

The cooling method is not particularly limited. For example, a flow path may be provided inside an electrode used for energization, and a cooling medium may flow through the flow path. When the current value is reduced to 0 or a small value close to 0 while the electrode having such a configuration is in contact with the steel sheet 11 and the steel member 12, the joint portion 13 is rapidly cooled by a heat removal phenomenon from the joint portion 13 to the electrode. Then, quench hardening occurs in the entire joint portion 13 including the first end region 131A.

In the cooling step, it is necessary to cool all the joint portions 13. On the other hand, the cooling time and other conditions in the cooling step are not particularly limited. Cooling conditions that can cause quench hardening can be appropriately selected according to the configurations of the steel sheet 11 and the steel member 12. For example, the presence or absence of quench hardening can be determined based on the Hm of the steel sheet described later. In addition, the steel sheet 11 and the steel member 12 to be joined are subjected to test welding in which a second energizing step to be described later is omitted, and the hardness of the joint portion obtained by the test welding is evaluated, whereby whether or not the cooling condition in the cooling step in the test welding causes quench hardening can be confirmed. By repeating such test welding, suitable cooling conditions can be determined. Examples of suitable cooling conditions will be described later.

(Second Energization)

In the method for manufacturing a projection weld joint according to the present embodiment, second energization is applied to the quenched projection weld 13 after quenching, and the edge of the projection weld 13 is tempered while the central part of the projection weld 13 is kept as quenched. It is preferable that a maximum value of hardness at a portion having a depth of 0.3 mm from the surface 11a of the hot-stamping steel sheet 11 in a region up to 0.5 mm from the end portion 130 of the projection weld 13 away from the centroid of the plane 12a toward the center of the projection weld 13 be less than 95% of Hm in Equation 1, and a maximum value of hardness at a portion having a depth of 0.3 mm from the surface of the hot-stamping steel sheet of the projection weld be larger than 95% of Hm in Equation 1:

$$Hm = 884 \times [C] \times (1 - 0.3 \times [C]^2) + 294 : \text{Equation 1}.$$

Here, the element symbol included in Equation 1 is the content, by mass%, of each element included in the hot-stamping steel sheet 11 having a tensile strength of 1.5 GPa or more and including the Al-based plating layer on the surface 11a.

In other words, after the cooling step, the steel sheet 11 and the steel member 12 are energized so as to temper the plurality of first end regions 131A in edges of each of the plurality of joint portions 13 (preferably the plurality of the first end regions 131A in each of the plurality of joint portions 13). This energizing step is referred to as second energization.

In the present disclosure, tempering of the steel refers to a heat treatment for setting the Vickers hardness of the steel to $0.95 \times Hm$ or less. Hm is a value calculated by Equation 1 and an estimated value of the Vickers hardness of the steel sheet when the steel sheet is tempered so that the microstructure is entirely martensite. For example, when the Vickers hardness of the first end region 131A is $0.95 \times Hm$ or less after the cooling step, the first end region 131A is considered to be tempered. Quenching of steel refers to a heat treatment for making the Vickers hardness of steel greater than $0.95 \times Hm$. For example, when the Vickers hardness of the first end region 131A exceeds $0.95 \times Hm$ after the cooling step, the first end region 131A is considered to be quenched.

When the edge (preferably the first end region 131A) of the projection weld 13 is tempered while a central part of the projection weld 13 is kept as quenched in the second energizing step, the edge (preferably the first end region 131A) of the projection weld 13 is softened. As a result, the stress introduced to the edge (preferably the first end region 131A) of the projection weld 13 in the cooling step is alleviated. Furthermore, by softening the edge (preferably the first end region 131A) of the projection weld 13 and then releasing the electrode, stress introduced to the edge (preferably the first end region 131A) of the projection weld 13 when the electrode is released is also alleviated. The tempering needs to be performed on all the joint portions 13.

The present inventors have found that the edge of the projection weld 13 or the first end region 131A is a dangerous part where delayed fracture is likely to occur. By reducing the stress, which is one of the factors causing the delayed fracture, in the dangerous part, the delayed fracture can be suppressed.

At the start of the first energizing step, the contact area between the projection portion 121 of the steel member 12 and the steel sheet 11 is extremely small, and thus the current density at the contact surface is high. Therefore, in the first energizing step, the contact surface is heated to an extremely high temperature, and quench hardening occurs over the entire joint portion 13. On the other hand, since the joint portion 13 is formed between the projection portion 121 of the steel member 12 and the steel sheet 11 at the start of the second energizing step, the current density at the joint portion 13 is lower than that at the start of the first energizing step. Moreover, the current density in the joint portion 13 is not uniform. Therefore, a tempered structure softened from the central part of the joint portion 13 is formed in the first end region of the joint portion 13.

As described above, it is preferable that, in the method for manufacturing a projection weld joint according to the present embodiment, in a cross section in a sheet thickness direction of the hot-stamping steel sheet 11, the cross section passing through the center of the projection weld 13 tempered and the centroid of the plane 12a, a maximum value of hardness at a portion having a depth of 0.3 mm from the surface 11a of the hot-stamping steel sheet **11** in a region up to 0.5 mm from the end portion 130 away from the centroid of the plane 12a of the projection weld 13 toward the center of the projection weld 13 be less than 95% of Hm in Equation 1, and a maximum value of hardness at a portion having a depth of 0.3 mm from the surface 11a of the hot-stamping steel sheet 11 of the projection weld 13 be larger than 95% of Hm in Equation 1:

$$\mathrm{Hm} = 884 \times [\mathrm{C}] \times (1 - 0.3 \times [\mathrm{C}]^2) + 294 : \text{Equation 1}$$

Here, the element symbol included in Equation 1 is the content, by mass%, of each element included in the hot-stamping steel sheet 11 having a tensile strength of 1.5 GPa or more and including the Al-based plating layer on the surface 11a.

Hm of the steel sheet is an estimated value of the Vickers hardness of the steel sheet when the steel sheet is tempered so that the microstructure is entirely martensite. Based on the Hm, the hardness of the Al-based plated hot-stamping steel sheet after quenching can be predicted. When the maximum value of the hardness at the portion having a depth of 0.3 mm from the surface 11a of the hot-stamping steel sheet 11 of the projection weld 13 is larger than 95% of Hm in Equation 1, it can be considered that quench hardening has occurred in the projection weld 13. In addition, in a case where the maximum hardness Hmax of the joint portion 13 is more than 0.95 times Hm, when the maximum value of the hardness at the portion having a depth of 0.3 mm from the surface 11a of the hot-stamping steel sheet 11 in the region up to 0.5 mm from the end portion 130 away from the centroid of the plane 12a of the projection weld 13 toward the center of the projection weld 13 is less than 95% of Hm in Equation 1, it can be considered that the projection weld 13 is once quenched after projection welding and then tempered. Since the end portion 130 of the projection weld 13 is softened (preferably, the first end region 131A is softened), the projection weld joint 1 obtained by the manufacturing method according to the present embodiment has higher delayed fracture resistance property.

As described above, the tensile strength of the Al-based plated hot-stamping steel sheet may be 2.0 GPa or more. In this case, it is preferable that, in a cross section in a sheet thickness direction of the hot-stamping steel sheet, the cross section passing through the center of the projection weld 13 tempered and the centroid of the plane 12a, a maximum value of hardness at a portion having a depth of 0.3 mm from the surface 11a of the hot-stamping steel sheet in a region up to 0.3 mm from the end portion 130 away from the centroid of the plane 12a of the projection weld 13 toward the center of the projection weld 13 be less than 95% of Hm in Equation 1, and a maximum value of hardness at a portion having a depth of 0.3 mm from the surface 11a of the hot-stamping steel sheet of the projection weld 13 be larger than 95% of Hm in Equation 1. In other words, in a case where the tensile strength of the Al-based plated hot-stamping steel sheet is 2.0 GPa or more, and a region of the joint portion from the end portion along the first surface of the Al-based plated hot-stamping steel sheet to a position 0.3 mm away from the center of the steel member is defined as a second end region 121B (see FIG. 3C) of the joint portion, in the second energizing step, the Al-based plated hot-stamping steel sheet and the steel member may be energized so as to temper the second end region 121B. For welding a hot-stamping steel sheet of 2.0 GPa or more, by narrowing the tempered region, delayed fracture is more effectively prevented, and at the same time, a decrease in indentation peeling strength due to softening is prevented. Such tempering is achieved by shortening the energization time in the second energizing step. For example, the energization time in the second energizing step is preferably less than 200 msec.

The condition of the second energizing step is not particularly limited as long as the first end region 131A can be tempered. An appropriate current value and energizing time may be set according to the configurations of the steel sheet 11 and the steel member 12, the conditions of the first energizing step and the cooling step performed before the second energizing step, and the like.

In spot welding classified as resistance welding similar to projection welding, a technique is known in which a nugget is formed by main energizing, and then the nugget is tempered by post energizing. However, it is not preferable to use the post-energizing condition in spot welding as the second energizing condition in projection welding. This is because, while spot welding has one welding point, projection welding has a plurality of welding points, and it is necessary to match the amount of heat generation and the like at each welding point as much as possible. In projection welding, there are more matters to be considered than spot welding, and the contents thereof are different between the two. Therefore, the procedure for optimizing the welding condition is also different between the two. In implementation of the method for manufacturing a projection weld joint according to the present embodiment, it is preferable to optimize the welding conditions according to the shape, material, and the like of the member.

As described above, the first energizing condition, the cooling condition, and the second energizing condition are not particularly limited. An appropriate value according to the type of surface treatment of the steel sheet and the like can be appropriately selected. Here, a preferable example of a combination of the first energizing condition, the cooling condition, and the second energizing condition is as follows. It is preferable that the hot-stamping steel sheet 11 have a sheet thickness of 1.2 mm to 3.6 mm, a time from the end of the first energization to the start of the second energization be 332 msec or more, and a product $I2 \times t2$ of average current value $I2$ and energizing time $t2$ in the second energization be 0.5 times or more a product $I1 \times t1$ of average current value $I1$ and energizing time $t1$ in the first energization. In other words, when the steel sheet 11 is an Al-based plated hot-stamping steel sheet and the sheet thickness of the steel sheet 11 is 1.2 mm to 3.6 mm, the length of the cooling step is preferably 332 msec or more, and the average current value $I1$ in the first energizing step, the energizing time $t1$ in the first energizing step, the average current value $I2$ in the second energizing step, and the energizing time $t2$ in the second energizing step preferably satisfy a relationship of $I2 \times t2 \geq 0.5 \times (I1 \times t1)$.

The length of the cooling step is the length of the non-energizing time between the first energization and the second energization. By setting the length of the cooling step to 332 msec or more, it is possible to sufficiently cool the joint portion 13 and to cause quench hardening. The length of the cooling step may be 498 msec or more, or 581 msec or more. The length of the cooling step is, for example, 332 msec or more, preferably 498 msec or more, and more preferably 581 msec or more. It is not necessary to completely stop the energization in the cooling step, and the energization may be slightly performed.

The energizing time $t1$ in the first energizing step is a length of a period from a point at which energization for joining the projection and the steel sheet is started to a point at which the current value becomes substantially 0. When there is a pre-energizing step for softening the projection before the first energizing step, the pre-energizing time is not included in the energizing time $t1$. The average current value $I1$ in the first energizing step is an average value of current values in the period. The energizing time $t2$ in the second energizing step is a length of a period from a point at which the cooling step is completed and energization is started to a point at which the current value becomes 0 again. The average current value $I2$ in the second energizing step is an average value of current values in the period. The current value in the first energizing step and the second energizing step may be a constant value or may vary during the energization period. The average current value $I1$ from the start to the end of the first energizing step is a value obtained by dividing the time integral value of the current value in the period from the start point to the end point of the first energizing step by the energizing time $t1$ in the first energizing step. Similarly, the average current value $I2$ from the start to the end of the second energizing step is a value obtained by dividing the time integral value of the current value in the period from the start point to the end point of the second energizing step by the energizing time $t2$ in the second energizing step.

By setting the $I2 \times t2$ to 0.5 times or more the $I1 \times t1$, the temperature of the joint portion 13 can be reliably raised to equal to or more than the tempering temperature. The $I2 \times t2$ may be 0.6 times or more, or 0.8 times or more the $I1 \times t1$. The upper limit of $I2 \times t2$ is not particularly limited, but the $I2 \times t2$ may be defined as 4.5 times or less or 4.0 times or less the $I1 \times t1$ in order to prevent the joint portion 13 from being heated above the re-quenching temperature.

(Third Energization)

The first energization may be performed not before the hot-stamping steel sheet 11, the projection portion 121, and the steel member 12 are subjected to the third energization with a current value less than the current value at the start point of the first energization. In other words, before the first energizing step, the steel sheet 11 and the steel member 12 may be energized with a current value less than the current value at the start point of the first energizing step. This energization is referred to as pre-energization. By performing the pre-energizing step, the projection portion 121 of the steel member 12 can be softened and deformed before the joining phenomenon between the steel sheet 11 and the steel member 12 occurs. As a result, the contact state between the plurality of projection portions 121 and the steel sheet 11 can be made uniform, and the joining strength of the projection weld joint can be further enhanced.

The current value in the pre-energizing step may be a constant value or may vary during the energization period. For example, the power supply may be controlled so that the current value at the time of the pre-energizing step gradually increases. When the temporal change of the current value is plotted in a graph under such energizing conditions, the graph has a slope shape with a positive slope. On the other hand, the current value may be instantaneously increased to a predetermined value, and the current value may be held at the predetermined value. Various energization patterns can be applied to the pre-energizing step. In addition, a non-energizing time may be provided between the pre-energizing step and the first energizing step, or the pre-energizing step and the first energizing step may be continuously performed.

The Al-based plated hot-stamping steel sheet used as the steel sheet **11** may be a steel sheet constituting a patchwork member. The patchwork member is a member obtained by hot-stamping two or more spot-welded steel sheets.

In the method for manufacturing a projection weld joint according to the present embodiment, the patchwork member is, for example, a sheet assembly obtained by spot welding and then hot stamping two stacked hot-stamping original sheets each having a sheet thickness of 0.8 to 2.3 mm. The steel sheet disposed on the surface layer of the sheet assembly which is the patchwork member may be used as the steel sheet 11 in the manufacturing method according to the present embodiment. **In** other words, in the method for manufacturing a projection weld joint according to the present embodiment, the hot-stamping steel sheet 11 may include a first steel sheet, a second steel sheet, and a spot-welding portion that joins the first steel sheet and the second steel sheet, and the sheet thickness of the hot-stamping steel sheet may be 0.8 to 2.3 mm.

In the steel sheet disposed on the surface layer of the patchwork member, delayed fracture is more likely to occur. This is because, since the total sheet thickness of the patchwork member is large, the stress applied to the joint portion increases when the steel member is projection-welded to the patchwork member. However, in the method for manufacturing a projection weld joint according to the present embodiment, quenching and tempering are performed on the joint portion 13 by the cooling step and the second energizing step. Therefore, even if the steel sheet 11 is a steel sheet disposed on the surface layer of the patchwork member, the delayed fracture can be effectively suppressed according to the manufacturing method according to the present embodiment. Therefore, according to the manufacturing method according to the present embodiment, the degree of freedom in designing the mechanical component is improved.

<Projection Weld Joint>

Next, the projection weld joint according to the present embodiment will be described below. Note that the various configurations described in the method for manufacturing a projection weld joint described above can be appropriately applied to a projection weld joint to be described later. However, the method for manufacturing a projection weld joint according to the present embodiment is not particularly limited. A projection weld joint obtained by a method other than the manufacturing method described above is also understood to be the projection weld joint according to the present embodiment when the requirement described below is satisfied.

The projection weld joint 1 according to the present embodiment includes: the hot-stamping steel sheet 11 including an Al-based plating layer on a surface and having a tensile strength of 1.5 GPa or more; the steel member 12 including the plane 12a; and the projection weld 13 that joins the plane 12a and the surface 11a, in which, in a cross section in a sheet thickness direction of the hot-stamping steel sheet 11, the cross section passing through the center of the projection weld 13 and the centroid of the plane 12a, a maximum value of hardness at a portion having a depth of 0.3 mm from the surface 11a of the hot-stamping steel sheet 11 at an end portion 130 away from the centroid of the plane 12a of the projection weld 13 is less than 95% of Hm in Equation 1, and a maximum value of hardness at a portion having a depth of 0.3 mm from the surface 11a of the hot-stamping steel sheet 11 of the projection weld 13 is larger than 95% of Hm in Equation 1:

$$Hm = 884 \times [C] \times (1 - 0.3 \times [C]^2) + 294 : \text{Equation 1}$$

Here, the element symbol included in Equation 1 is the content, by mass%, of each element included in the hot-stamping steel sheet 11. Preferably, in a cross section along a sheet thickness direction of the hot-stamping steel sheet, the cross section passing through the center of the projection weld 13 and the centroid of the plane 12a, a maximum value of hardness at a portion having a depth of 0.3 mm from the surface 11a of the hot-stamping steel sheet in a region up to 0.5 mm from the end portion 130 of the projection weld 13 away from the centroid of the plane 12a toward the center of the projection weld 13 is less than 95% of Hm in Equation 1.

Alternatively, the projection weld joint 1 according to the present embodiment includes the Al-based plated hot-stamping steel sheet 11; the steel member 12 that is a nut, a bolt, or a rivet; and the plurality of joint portions 13 that join the first surface 11a of the Al-based plated hot-stamping steel sheet 11 and the steel member 12, in which the Al-based plated hot-stamping steel sheet 11 has a tensile strength of 1.5 GPa or more, and when, in a cross section passing through the center of the steel member 12 and the center of the joint portion 13 and perpendicular to the first surface 11a of the Al-based plated hot-stamping steel sheet 11, a position farthest from the center of the steel member 12 in the joint portion 13 is defined as the end portion 130 of the joint portion 13, and a region of the joint portion 13 from the end portion 130 to a position 0.5 mm away from the center of the steel member 12 along the first surface 11a of the Al-based plated hot-stamping steel sheet 11 is defined as the first end region 131A of the joint portion 13, a hardness at a portion having a depth of 0.3 mm from the surface of the hot-stamping steel sheet of the end portion 130 is less than 95% of Hm, which is determined by continuously measuring the Vickers hardness at a portion having a depth of 0.3 mm from the first surface 11a in each of the plurality of joint portions 13, and preferably, a maximum hardness Hedge of the first end region 131A obtained by continuously measuring a Vickers hardness at a position 0.3 mm deep from the first surface in each of the plurality of joint portions 13 satisfies a relationship of Equation 3, and a maximum hardness Hmax of the joint portions 13 obtained by continuously measuring a Vickers hardness at a position 0.3 mm deep from the first surface 11a in each of the plurality of joint portions 13 satisfies a relationship of Equation 4.

$$\text{Hedge} < 0.95 \times \text{Hm: Equation 3}$$

$$\text{Hmax} > 0.95 \times \text{Hm: Equation 4}$$

Here, the symbol Hm included in Equations 3 and 4 is a value calculated by Equation 1.

$$\text{Hm} = 884 \times [C] \times (1 - 0.3 \times [C]^2) + 294: \text{Equation 1}$$

Here, the element symbol included in Equation 1 is the content, by mass%, of each element included in the Al-based plated hot-stamping steel sheet 11.

(Steel Sheet 11)

The steel sheet 11 is a hot-stamping steel sheet having a tensile strength of 1.5 GPa or more, including an Al-based plating layer on the surface 11a, that is, an Al-based plated hot-stamping steel sheet having a tensile strength of 1.5 GPa or more. The tensile strength of the steel sheet 11 may be 1.6 GPa or more, 1.7 GPa or more, 1.8 GPa or more, 2.0 GPa or more, 2.2 GPa or more, or 2.5 GPa or more. As a result, the projection weld joint 1 has extremely excellent static strength. The preferred form of the steel sheet 11 exemplified in the method for manufacturing a projection weld joint described above can be applied to the steel sheet 11 of the projection weld joint 1 according to the present embodiment.

(Steel Member 12)

In the projection weld joint according to the present embodiment, the steel member 12 has the plane 12a. The plane 12a of the steel member 12 is joined to the surface 11a of the hot-stamping steel sheet by the projection weld 13. In the projection weld joint according to the present embodiment, the steel member 12 is, for example, a nut, a bolt, or a rivet. Here, the steel member 12 may or may not include the plurality of projection portions 121 in contact with the steel sheet 11 in a distinguishable manner. This is because the plurality of projection portions 121 can be crushed and lost during projection welding. Further, the projection portion 121 is required for projection welding, and is not particularly required after completion of welding. Furthermore, the shape of the steel member 12 is not particularly limited.

(Projection Weld 13 (Joint Portion 13))

The projection weld 13, that is, the joint portion 13 is formed at a contact part between the plurality of projection portions 121 and the first surface 11a of the steel sheet 11 by projection welding. Therefore, the number of the joint portions 13 is 2 or more, and preferably 3 or more or 4 or more. The joint portion 13 joins the first surface 11a of the steel sheet 11 and the steel member 12. The joint portion 13 may be made of a weld metal or a solid-phase joining surface. The position of the joint portion 13 is not particularly limited, but similarly to the projection portion 121, the joint portion 13 is preferably disposed at a position rotationally symmetric with respect to the centroid of the steel member 12 in a plane view with respect to the joining surface. The projection weld 13 joins the surface 11a of the hot-stamping steel sheet and the plane 12a of the steel member.

In the projection weld joint 1 according to the present embodiment, in each of the plurality of joint portions 13, the maximum hardness Hedge in the first end region 131A and the maximum hardness Hmax in the entire joint portions 13 are within predetermined ranges. A specific method for measuring the hardness will be described later.

In the projection weld joint according to the present embodiment, the entire joint portion 13 is once quenched, and the first end region 131A of the joint portion 13 is tempered. Accordingly, in a cross section in a sheet thickness direction of the hot-stamping steel sheet, the cross section passing through the center of the projection weld 13 and the centroid of the plane 12a, a maximum value of hardness at a portion having a depth of 0.3 mm from the surface 11a of the hot-stamping steel sheet in the end portion 130 away from the centroid of the plane 12a of the projection weld 13 is less than 95% of Hm in Equation 1, and a maximum value of the hardness at a portion having a depth of 0.3 mm from the surface 11a of the hot-stamping steel sheet of the projection weld 13 is larger than 95% of Hm in Equation 1. Preferably, the maximum value of the hardness at the portion having a depth of 0.3 mm from the surface 11a of the hot-stamping steel sheet in the region up to 0.5 mm from the end portion 130 away from the centroid of the plane 12a of the projection weld 13 toward the center of the projection weld 13 is less than 95% of Hm in Equation 1.

In other words, in the projection weld joint according to the present embodiment, preferably, the hardness at the portion of 0.3 mm in depth from the surface of the hot-stamping steel sheet at the end portion 130 is less than 95% of Hm, and the maximum hardness Hmax of the joint portion 13 satisfies Equation 4. Further, preferably, the maximum hardness Hedge of the first end region 131A satisfies Equation 3.

$$\mathrm{Hedge} < 0.95 \times \mathrm{Hm} : \text{Equation 3}$$

$$\mathrm{Hmax} > 0.95 \times \mathrm{Hm} : \text{Equation 4}$$

Here, the symbol Hm included in Equations 3 and 4 is a value calculated by Equation 1.

$$\mathrm{Hm} = 884 \times [\mathrm{C}] \times (1 - 0.3 \times [\mathrm{C}]^2) + 294 : \text{Equation 1}$$

Here, the element symbol included in Equation 1 is the content, by mass%, of each element included in the Al-based plated hot-stamping steel sheet.

Hm of the steel sheet is an estimated value of the Vickers hardness of the steel sheet when the steel sheet is tempered so that the microstructure is entirely martensite. Based on the Hm, the hardness of the Al-based plated hot-stamping steel sheet after quenching can be predicted. When the maximum hardness Hmax of the joint portion 13 is more than 0.95 times the Hm, it can be regarded that quench hardening occurs in the joint portion 13. In addition, in a case where the maximum hardness Hmax of the joint portion 13 is more than 0.95 times Hm, and in a case where the hardness of at least the end portion 130 is less than 0.95 times Hm (preferably, when the maximum hardness Hedge of the first end region 131A is less than 0.95 times Hm), it can be considered that the joint portion 13 is once quenched after projection welding and then tempered. Since the end portion 130 of the joint portion 13, or the first end region 131A of the joint portion 13, is softened, the projection weld joint 1 according to the present embodiment has higher delayed fracture resistance property.

As described above, the tensile strength of the Al-based plated hot-stamping steel sheet may be 2.0 GPa or more. In this case, it is preferable that, in a cross section in a sheet thickness direction of the hot-stamping steel sheet, the cross section passing through the center of the projection weld 13 and the centroid of the plane 12a, a maximum value of hardness at a portion having a depth of 0.3 mm from the surface 11a of the hot-stamping steel sheet in a region up to 0.3 mm from the end portion 130 of the projection weld 13 away from the centroid of the plane 12a of the projection weld 13 toward the center of the projection weld 13 be less than 95% of Hm in Equation 1. In other words, it is further preferable that, in a case where the tensile strength of the Al-based plated hot-stamping steel sheet is 2.0 GPa or more, a region of the joint portion from the end portion along the first surface of the Al-based plated hot-stamping steel sheet to a position 0.3 mm away from the center of the steel member be defined as a second end region 121B (see FIG. 3C) of the joint portion, and the maximum hardness Hedge of the second end region satisfy the relationship of Equation 3. As a result, delayed fracture is more effectively prevented, and at the same time, a decrease in the indentation peeling strength due to softening is prevented.

Hedge may be 0.85 times or less the Hm. That is, the maximum hardness Hedge of the first end region 131A may satisfy a relationship of the following Equation 3'. Further, the maximum hardness Hedge of the second end region 131B may satisfy a relationship of the following Equation 3'. This further enhances the delayed fracture resistance property of the projection weld joint 1.

$$\mathrm{Hedge} < 0.85 \times \mathrm{Hm} : \text{Equation 3'}$$

In both the first end region 131A and the second end region 131B, Hedge may be 0.8 times or less, 0.7 times or less, or 0.6 times or less Hm. However, even when the relationship of Hedge ≤ Hmax × 0.95 is not satisfied in the joint portion 13, the effect of suppressing the delayed fracture can be obtained as long as the joint portion 13 is quenched and tempered in the cooling step and the second energizing step described above.

(Method of Measuring Hardness of Projection Weld 13 (Joint Portion 13))

A method of measuring the maximum hardness Hedge of the first end region 131A, the maximum hardness Hedge of the second end region 131B, and the maximum hardness Hmax of the joint portion 13 is as follows. First, all of the plurality of joint portions 13 are cut in a plane perpendicular to the first surface 11a of the Al-based plated hot-stamping steel sheet 11, and then the cut surface is polished. Each of these cut surfaces needs to pass through the center of the steel member 12 and the center of the joint portion 13. For example, in a steel member having three projection portions as shown in FIG. 2, the joint portion 13 is cut along a one-dot chain line. In other words, in the evaluation of the hardness of the projection weld 13, a cross section passing through the center of the projection weld 13 and the centroid of the plane 12a of the steel member 12 and along the sheet thickness direction of the hot-stamping steel sheet 11 needs to be used as the hardness measurement surface.

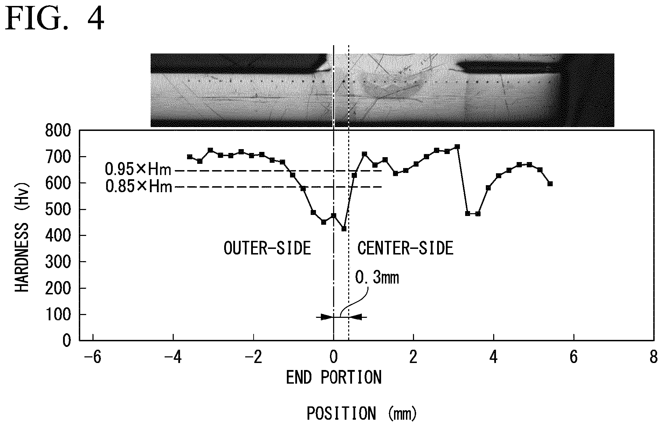

Next, in all the cut surfaces, the Vickers hardness is continuously measured along a line parallel to the first surface 11a of the steel sheet 11 and at a position 0.3 mm deep from the first surface 11a. The measurement load is 500 g, the time for applying the load to an indenter is 10 seconds, and the measurement interval is 0.25 mm. As a result, for each cut surface, a graph showing a relationship between the hardness measurement position and the hardness, for example, as shown in FIG. 3 or FIG. 4, can be created.

In the hardness measurement result shown in FIG. 3, Hedge satisfies Equation 4 in the first end region 131A. In the hardness measurement result shown in FIG. 4, Hedge satisfies Equation 4 in the second end region 131B.

In the hardness-measurement position graph obtained in the above procedure, a hardness measurement value up to a position 0.5 mm away from the end of the joint portion toward the centroid of the plane of the steel member (that is, the center of the steel member) is extracted. The maximum value among these hardness measurement values is regarded as the maximum hardness Hedge of the first end region 131A.

Further, in the hardness-measurement position graph obtained in the above procedure, a hardness measurement value up to a position 0.3 mm away from the end of the joint portion toward the centroid of the plane of the steel member is extracted. The maximum value among these hardness measurement values is regarded as the maximum hardness Hedge of the second end region 131B.

Moreover, the maximum value among all the hardness measurement values of the joint portion is regarded as the maximum hardness Hmax of the joint portion 13. When the hardness measurement value corresponding to Hmax is a value obtained inside the first end region 131A, Hedge and Hmax have the same value. However, in this case, both Equation 4 and Equation 1 are not satisfied.

In each of the plurality of joint portions, Hedge and Hmax in the first end region 131A are specified, and it is confirmed whether or not these satisfy the above formulas. In addition to the Hedge of the first end region 131A, it may be confirmed whether or not the Hedge of the second end region 131B satisfies the equation above. In all the joint portions, a projection weld joint in which Hedge and Hmax of at least the first end region 131A satisfy the equations above is regarded as the projection weld joint according to the present embodiment.

<Vehicle Component>

Next, a vehicle component according to the present embodiment will be described below. The vehicle component according to the present embodiment includes the projection weld joint according to the embodiment described above. Thus, the vehicle component according to the present embodiment is composed of a high-strength steel sheet having a tensile strength of 1.5 GPa or more, and having excellent delayed fracture resistance property. Examples of the vehicle component include a side sill, a front-side member reinforcement, a B-pillar, a B-pillar hinge reinforcement (including a patch), a B-pillar lower, and an A-pillar lower. The tensile strength of the high-strength steel sheet may be 1.6 GPa or more, 1.7 GPa or more, 1.8 GPa or more, 2.0 GPa or more, 2.2 GPa or more, or 2.5 GPa or more.

[Examples]

The effect of the present disclosure is described more specifically with reference to examples. However, the conditions in Examples are merely one condition example adopted to confirm the operability and effects of the present disclosure. The present disclosure is not limited to this one condition example. The present disclosure can adopt various conditions as long as the object of the present disclosure is achieved without departing from the gist of the present disclosure.

Tables 2A and 2B show data for various steel sheets prepared for manufacturing the examples. The steel member to be joined to the steel sheet was an M8 nut having three dome-shaped protrusions.

In some examples, two steel sheets were overlaid, and spot welding was performed on the overlaid portion. Then, the steel member was projection-welded at a position away from the spot-welding portion on the surface of the steel sheet of the spot welded joint. In such an example, the sheet thickness of each steel sheet is written in the column of "Sheet Thickness". In addition, the numerical value of the steel sheet on the side to which the steel member is welded is denoted as "Welded Side". For example, in Example 3, a steel sheet having a tensile strength of 1.8 GPa and a sheet thickness of 1.8 mm and a steel sheet having a tensile strength of 1.8 GPa and a sheet thickness of 1.6 mm are spot-welded, and then a steel member is welded to the steel sheet having a sheet thickness of 1.8 mm.

As for the amount of hydrogen in the steel, as described above, the steel sheet was cooled to -10°C or lower and frozen immediately after the heat treatment, the temperature was raised at 100°C/hr in temperature-raising hydrogen analysis, the amount of diffusible hydrogen released up to 300°C was used to evaluate the amount of hydrogen entering (He), and the results thereof are summarized in Table 2.

Tables 3A to 3D show projection welding conditions. Here, the "Pressurizing Force" refers to a pressure for pressurizing the steel member against the steel sheet during a projection welding (first energization) step, a cooling step, and a second energizing step. In a series of steps, the pressurizing force was set to a constant value. The term "Squeeze" refers to the time from the start of application of the pressurizing force to the start of flow of the projection welding current. The "Holding Step" refers to the time from the end of the second energization until the pressurizing force was reduced to 0. The "First Heat Input" is the product of the average current value and the energizing time in the projection welding (first energization), and the "Second Heat Input" is the product of the average current value and the energizing time in the second energization. In all the examples, before the first energization, pre-energization including 2 cyc of up-slope energization and 6 cyc of constant energization was performed.

Tables 4A and 4B show the hardness measurement results of the joint portion and the evaluation results of the delayed fracture resistance property.

In the column of "Tempered Region (End Reference)," a region where it was confirmed that tempering had occurred is described. When it was confirmed that the center-side end region was tempered, the "inner side" is described in the column of "Tempered Region (End Reference)". When it was confirmed that the outer end region was tempered, the "outer side" is described in the column of "Tempered Region (End Reference)". If at least one of the center-side end region and the outer end region is appropriately tempered, the requirements of the present disclosure are satisfied. Therefore, when it was confirmed that one Hedge of these regions satisfied Equation 3, the measurement of the other Hedge was omitted. When it was confirmed that tempering was not performed in both the center-side end region and the outer end region, hatched lines are shown in the column of "Tempered Region (End Reference)".

In the column of "Hmax", the maximum hardness of the joint portion is described.

In the column of "Hedge", the maximum hardness in the region on the side described in the column of "Tempered Region (End Reference)," among the center-side end region and the outer end region, is described.

In the column of "Quenching Determination of Joint Portion", "B" is written when the maximum hardness Hmax of the joint portion exceeded the value in the column of "0.95 × Hm" in Table 2, and "D" is written otherwise.

In the column of "Tempering of End Region", "B" is written when a value written in the column of "Hedge" was below the value in the column of "0.95 × Hm" in Table 2, "A" is written when such a value was below the value in the column of "0.85 × Hm". When Equation 3 was not satisfied in both the center-side end region and the outer end region, it is described as "D".

The hardness measurement was performed according to the method described above. Under the conditions of this experiment, all the three joint portions were formed symmetrically. Therefore, only the measurement value of one joint portion is written in the table as a representative value. However, since there was a case where the joint portions were not formed symmetrically under the actual operation condition, it was desirable to perform hardness evaluation or the like on all the joint portions.

The delayed fracture resistance property was first evaluated for the projection weld joint after four days had passed after completion of welding. The joint portion of the joint was cut and polished, and then observed at a magnification of 200 to confirm whether or not there were cracks. Crack confirmation was performed for 6 samples per condition. With respect to the condition under which cracks occurred in 4 or more of the 6 samples, "D" is written in the column of "Crack Investigation Result: After Welding", with respect to the condition under which cracks occurred in 1 to 3 of the 6 samples, "C" is written in the column of "Crack Investigation Result: After Welding", and with respect to the condition under which cracks did not occur in any of the 6 samples, "B" is written in the column of "Crack Investigation Result: After Welding". Note that although three joint portions were formed per projection weld joint, if one or more of the three joint portions were cracked, the joint was judged to be a "cracked joint".

In addition, the projection weld joint immediately after completion of welding was immersed in hydrochloric acid with the same pH for a predetermined time. In hydrochloric acid, hydrogen enters a joint portion or the like, so that delayed fracture is promoted. The three joint portions of the projection weld joint after immersion were cut and polished, and then observed at a magnification of 200 to confirm whether or not there were cracks. Crack confirmation was performed for 6 samples per condition. With respect to the condition under which cracks occurred in 4 or more of the 6 samples, "D" is written in the column of "Crack Investigation Result: Hydrochloric Acid", with respect to the condition under which cracks occurred in 1 to 3 of the 6 samples, "C" is written in the column of "Crack Investigation Result: Hydrochloric Acid", and with respect to the condition under which cracks did not occur in any of the 6 samples, "B" is written in the column of "Crack Investigation Result: Hydrochloric Acid".

The comprehensive assessment valuation based on both types of evaluation results is written in the column of "Determination". The condition under which the determination was "C" or "B" was judged as an example having excellent delayed fracture resistance property.

[Table 2A]

| | Ceq | Tensile strength of steel sheet | Carbon content | Hm | 0.95 × Hm | 0.85 × Hm | Sheet thickness | Hydrogen amount in steel |
|---|---|---|---|---|---|---|---|---|
| | Mass% | GPa | Mass% | Hv | Hv | Hv | mm | ppm |
| 1 | 0.38 | 1.8 | 0.31 | 560 | 532 | 476 | 1.8 | 0.35 |
| 2 | 0.38 | 1.8 | 0.31 | 560 | 532 | 476 | 1.8 | 0.60 |
| 3 | 0.38 (weld-side) + 0.38 | 1.8 (weld-side) + 1.8 | 0.31 (weld-side) + 0.38 | 560 (weld-side) | 532 (weld-side) | 476 (weld-side) | 1.8 (weld-side) + 1.6 | 0.6 (weld-side) |
| 4 | 0.31 | 1.5 | 0.22 | 486 | 461 | 476 | 1.8 | 0.30 |
| 5 | 0.38 | 1.8 | 0.31 | 560 | 532 | 476 | 1.6 | 0.90 |
| 6 | 0.38 | 1.8 | 0.31 | 560 | 532 | 476 | 1.6 | 0.90 |
| 7 | 0.38 | 1.8 | 0.31 | 560 | 532 | 476 | 2 | 0.90 |
| 8 | 0.38 | 1.8 | 0.31 | 560 | 532 | 476 | 2.3 | 0.90 |
| 9 | 0.38 | 1.8 | 0.31 | 560 | 532 | 476 | 2.6 | 0.90 |
| 10 | 0.38 | 1.8 | 0.31 | 560 | 532 | 476 | 2.9 | 0.90 |
| 11 | 0.38 (weld-side) + 0.38 | 1.8 (weld-side) + 1.8 | 0.31 (weld-side) + 0.38 | 560 (weld-side) | 532 (weld-side) | 476 (weld-side) | 1.8 (weld-side) + 1.6 | 0.90 (weld-side) |
| 12 | 0.38 (weld-side) + 0.38 | 1.8 (weld-side) + 1.8 | 0.31 (weld-side) + 0.38 | 560 (weld-side) | 532 (weld-side) | 476 (weld-side) | 1.8 (weld-side) + 1.6 | 0.90 (weld-side) |
| 13 | 0.38 | 1.8 | 0.31 | 560 | 532 | 476 | 1.8 | 0.90 |
| 14 | 0.38 | 1.8 | 0.31 | 560 | 532 | 476 | 1.8 | 0.90 |
| 15 | 0.38 | 1.8 | 0.31 | 560 | 532 | 476 | 1.8 | 0.90 |
| 16 | 0.38 | 1.8 | 0.31 | 560 | 532 | 476 | 1.8 | 0.90 |
| 17 | 0.38 | 1.8 | 0.31 | 560 | 532 | 476 | 1.8 | 0.90 |
| 18 | 0.38 | 1.8 | 0.31 | 560 | 532 | 476 | 1.8 | 0.90 |
| 19 | 0.38 | 1.8 | 0.31 | 560 | 532 | 476 | 1.8 | 0.90 |
| 20 | 0.38 | 1.8 | 0.31 | 560 | 532 | 476 | 1.8 | 0.90 |
| 21 | 0.38 | 1.8 | 0.31 | 560 | 532 | 476 | 1.8 | 0.90 |
| 22 | 0.38 | 1.8 | 0.31 | 560 | 532 | 476 | 1.8 | 0.90 |
| 23 | 0.38 | 1.8 | 0.31 | 560 | 532 | 476 | 1.8 | 0.90 |
| 24 | 0.31 | 1.5 | 0.22 | 486 | 461 | 413 | 1.8 | 0.30 |
| 25 | 0.38 | 1.8 | 0.31 | 560 | 532 | 476 | 1.8 | 0.90 |

[Table 2B]

| | Ceq | Tensile strength of steel sheet | Carbon content | Hm | 0.95 × Hm | 0.85 × Hm | Sheet thickness | Hydrogen amount in steel |
|---|---|---|---|---|---|---|---|---|
| | Mass% | GPa | Mass% | Hv | Hv | Hv | mm | ppm |
| 26 | 0.51 | 2.5 | 0.46 | 675 | 641 | 574 | 1.6 | 0.80 |
| 27 | 0.51 | 2.5 | 0.46 | 675 | 641 | 574 | 1.6 | 0.90 |
| 28 | 0.51 | 2.5 | 0.46 | 675 | 641 | 574 | 1.6 | 0.90 |
| 29 | 0.51 | 2.5 | 0.46 | 675 | 641 | 574 | 1.6 | 0.90 |
| 30 | 0.51 | 2.5 | 0.46 | 675 | 641 | 574 | 1.6 | 0.90 |
| 31 | 0.51 | 2.5 | 0.46 | 675 | 641 | 574 | 1.6 | 0.90 |
| 32 | 0.51 | 2.5 | 0.46 | 675 | 641 | 574 | 1.6 | 0.90 |
| 33 | 0.51 | 2.5 | 0.46 | 675 | 641 | 574 | 1.6 | 0.90 |
| 34 | 0.51 | 2.5 | 0.46 | 675 | 641 | 574 | 1.6 | 0.90 |
| 35 | 0.61 | 2.5 | 0.55 | 736 | 699 | 626 | 1.6 | 0.90 |
| 36 | 0.65 | 2.5 | 0.58 | 755 | 717 | 642 | 1.6 | 0.90 |
| 37 | 0.51 | 2.5 | 0.46 | 675 | 641 | 574 | 1.6 | 0.90 |
| 38 | 0.51 | 2.5 | 0.46 | 675 | 641 | 574 | 1.6 | 0.90 |
| 39 | 0.51 (weld-side) + 0.51 | 2.5 (weld-side) + 2.5 | 0.46 (weld-side) + 0.46 | 675 (weld-side) | 641 (weld-side) | 574 (weld-side) | 1.8 (weld-side) + 1.4 | 0.90 (weld-side) |
| 40 | 0.51 (weld-side) + 0.31 | 2.5 (weld-side) + 1.5 | 0.46 (weld-side) + 0.22 | 675 (weld-side) | 641 (weld-side) | 574 (weld-side) | 1.8 (weld-side) + 1.4 | 0.90 (weld-side) |
| 41 | 0.40 (weld-side) + 0.40 | 2.0 (weld-side) + 2.0 | 0.33 (weld-side) + 0.33 | 576 (weld-side) | 547 (weld-side) | 490 (weld-side) | 1.8 (weld-side) + 1.4 | 0.90 (weld-side) |
| 42 | 0.40 (weld-side) + 0.31 | 2.0 (weld-side) + 1.5 | 0.33 (weld-side) + 0.22 | 576 (weld-side) | 547 (weld-side) | 490 (weld-side) | 1.8 (weld-side) + 1.4 | 0.90 (weld-siede) |

[Table 3A]

| | Pressurizing force | Squeeze | First energization | | Cooling |
|---|---|---|---|---|---|
| | | | Time | Current | Rest |
| | kN | ms | ms | kA | ms |
| 1 | 3.5 | 996 | 133 | 12.0 | |
| 2 | 3.5 | 996 | 133 | 12.0 | |
| 3 | 4.0 | 996 | 199 | 12.0 | |
| 4 | 3.5 | 996 | 133 | 12.0 | |
| 5 | 4.0 | 996 | 100 | 12.0 | 249 |
| 6 | 4.0 | 996 | 100 | 12.0 | 332 |

(continued)

| | Pressurizing force | Squeeze | First energization | | Cooling |
|---|---|---|---|---|---|
| | | | Time | Current | Rest |
| | kN | ms | ms | kA | ms |
| 7 | 5.0 | 996 | 133 | 12.0 | 664 |
| 8 | 5.0 | 996 | 166 | 12.0 | 830 |
| 9 | 5.0 | 996 | 166 | 12.0 | 996 |
| 10 | 5.5 | 996 | 166 | 12.0 | 1162 |
| 11 | 5.0 | 199 | 199 | 12.0 | 996 |
| 12 | 5.0 | 199 | 199 | 12.0 | 1328 |
| 13 | 4.0 | 996 | 133 | 12.0 | 664 |
| 14 | 4.0 | 996 | 133 | 12.0 | 664 |
| 15 | 4.0 | 996 | 133 | 12.0 | 664 |
| 16 | 4.0 | 996 | 133 | 12.0 | 664 |
| 17 | 4.0 | 996 | 133 | 12.0 | 664 |
| 18 | 4.0 | 996 | 133 | 12.0 | 664 |
| 19 | 4.0 | 996 | 133 | 12.0 | 664 |
| 20 | 4.0 | 996 | 133 | 12.0 | 664 |
| 21 | 4.0 | 996 | 133 | 12.0 | 664 |
| 22 | 4.0 | 996 | 133 | 12.0 | 664 |
| 23 | 4.0 | 996 | 133 | 12.0 | 664 |
| 24 | 3.5 | 996 | 133 | 12.0 | 664 |
| 25 | 4.0 | 996 | 133 | 12.0 | 664 |

[Table 3B]

| | Pressurizing force | Squeeze | First energization | | Cooling |
|---|---|---|---|---|---|
| | | | Time | Current | Rest |
| | kN | ms | ms | kA | ms |
| 26 | 4.0 | 996 | 160 | 10.0 | 1200 |
| 27 | 4.0 | 996 | 160 | 10.0 | 1200 |
| 28 | 4.0 | 996 | 160 | 10.0 | 1200 |
| 29 | 4.0 | 996 | 160 | 10.0 | 1600 |
| 30 | 4.0 | 996 | 160 | 10.0 | 1600 |
| 31 | 4.0 | 996 | 160 | 10.0 | 1600 |
| 32 | 4.0 | 996 | 160 | 10.0 | 2000 |
| 33 | 4.0 | 996 | 160 | 10.0 | 2000 |
| 34 | 4.0 | 996 | 160 | 10.0 | 2000 |
| 35 | 4.0 | 996 | 160 | 10.0 | 1200 |
| 36 | 4.0 | 996 | 160 | 10.0 | 1200 |
| 37 | 4.0 | 996 | 160 | 10.0 | 1200 |
| 38 | 4.0 | 996 | 160 | 10.0 | 1200 |

(continued)

|    | Pressurizing force | Squeeze | First energization | | Cooling |
|----|-----|-----|-----|-----|-----|
|    |     |     | Time | Current | Rest |
|    | kN  | ms  | ms   | kA      | ms   |
| 39 | 4.0 | 996 | 180  | 10.0    | 1350 |
| 40 | 4.0 | 996 | 180  | 10.0    | 1350 |
| 41 | 4.0 | 996 | 180  | 10.0    | 1350 |
| 42 | 4.0 | 996 | 180  | 10.0    | 1350 |

[Table 3C]

|    | Second energization | | Holding time | First heat input | Second heat input | Heat input ratio |
|----|-----|-----|-----|-----|-----|-----|
|    | Time | Current | | | | |
|    | ms  | kA  | ms  | A·s | A·s |     |
| 1  |     |     | 33  | 1593.6 | 0.0 | 0.0 |
| 2  |     |     | 33  | 1593.6 | 0.0 | 0.0 |
| 3  |     |     | 33  | 2390.4 | 0.0 | 0.0 |
| 4  |     |     | 33  | 1593.6 | 0.0 | 0.0 |
| 5  | 100 | 12.0 | 33 | 1195.2 | 1195.2 | 1.0 |
| 6  | 100 | 12.0 | 33 | 1195.2 | 1195.2 | 1.0 |
| 7  | 133 | 12.0 | 33 | 1593.6 | 1593.6 | 1.0 |
| 8  | 166 | 12.0 | 33 | 1992.0 | 1992.0 | 1.0 |
| 9  | 166 | 12.0 | 33 | 1992.0 | 1992.0 | 1.0 |
| 10 | 166 | 12.0 | 33 | 1992.0 | 1992.0 | 1.0 |
| 11 | 133 | 16.5 | 33 | 2390.4 | 2191.2 | 0.9 |
| 12 | 133 | 16.5 | 33 | 2390.4 | 2191.2 | 0.9 |
| 13 | 133 | 4.8  | 33 | 1593.6 | 637.4  | 0.4 |
| 14 | 133 | 6.0  | 33 | 1593.6 | 796.8  | 0.5 |
| 15 | 133 | 12.0 | 33 | 1593.6 | 1593.6 | 1.0 |
| 16 | 133 | 14.4 | 33 | 1593.6 | 1912.3 | 1.2 |
| 17 | 53  | 12.0 | 33 | 1593.6 | 637.4  | 0.4 |
| 18 | 66  | 12.0 | 33 | 1593.6 | 796.8  | 0.5 |
| 19 | 106 | 12.0 | 33 | 1593.6 | 1274.9 | 0.8 |
| 20 | 133 | 12.0 | 33 | 1593.6 | 1593.6 | 1.0 |
| 21 | 159 | 12.0 | 33 | 1593.6 | 1912.3 | 1.2 |
| 22 | 319 | 12.0 | 33 | 1593.6 | 3824.6 | 2.4 |
| 23 | 478 | 12.0 | 33 | 1593.6 | 5737.0 | 3.6 |
| 24 | 133 | 12.0 | 33 | 1593.6 | 1593.6 | 1.0 |
| 25 | 133 | 12.0 | 33 | 1593.6 | 1593.6 | 1.0 |

[Table 3D]

| | Second energization | | Holding time | First heat input | Second heat input | Heat input ratio |
|---|---|---|---|---|---|---|
| | Time | Current | | | | |
| | Ms | kA | ms | A·s | A·s | |
| 26 | 160 | 13.0 | 130 | 1600.0 | 2080.0 | 1.2 |
| 27 | 160 | 15.0 | 130 | 1600.0 | 2400.0 | 1.5 |
| 28 | 160 | 17.0 | 130 | 1600.0 | 2720.0 | 1.8 |
| 29 | 160 | 13.0 | 130 | 1600.0 | 2080.0 | 1.2 |
| 30 | 160 | 15.0 | 130 | 1600.0 | 2400.0 | 1.5 |
| 31 | 160 | 17.0 | 130 | 1600.0 | 2720.0 | 1.8 |
| 32 | 160 | 13.0 | 130 | 1600.0 | 2080.0 | 1.2 |
| 33 | 160 | 15.0 | 130 | 1600.0 | 2400.0 | 1.5 |
| 34 | 160 | 17.0 | 130 | 1600.0 | 2720.0 | 1.8 |
| 35 | 160 | 15.0 | 130 | 1600.0 | 2400.0 | 1.5 |
| 36 | 160 | 15.0 | 130 | 1600.0 | 2400.0 | 1.5 |
| 37 | 160 | 4.0 | 130 | 1600.0 | 640.0 | 0.4 |
| 38 | | | 130 | 1600.0 | 0.0 | 0.0 |
| 39 | 180 | 15.0 | 130 | 1800.0 | 2700.0 | 1.5 |
| 40 | 180 | 15.0 | 130 | 1800.0 | 2700.0 | 1.5 |
| 41 | 180 | 15.0 | 130 | 1800.0 | 2700.0 | 1.5 |
| 42 | 180 | 15.0 | 130 | 1800.0 | 2700.0 | 1.5 |

[Table 4A]

| | Hmax | Hedge | Quenching of joint portion | Tempering end region | Tempered region | Crack investigation result (N=6) | | Determination | Example/ Comparative Example |
| | Hv | Hv | | | | After welding | Hydrochloric acid | | |
|---|---|---|---|---|---|---|---|---|---|
| 1 | 580 | 580 | B | D | | D | D | D | Comparative Example |
| 2 | 580 | 580 | B | D | | D | D | D | Comparative Example |
| 3 | 580 | 580 | B | D | | D | D | D | Comparative Example |
| 4 | 480 | 480 | B | D | | D | D | D | Comparative Example |
| 5 | 560 | 520 | B | B | First end region | B | C | c | Example |
| 6 | 560 | 520 | B | B | First end region | B | C | C | Example |
| 7 | 560 | 450 | B | A | First end region | B | B | B | Example |
| 8 | 560 | 420 | B | A | First end region | B | B | B | Example |
| 9 | 560 | 400 | B | A | First end region | B | B | B | Example |
| 10 | 560 | 350 | B | A | First end region | B | B | B | Example |
| 11 | 560 | 360 | B | A | First end region | B | B | B | Example |
| 12 | 560 | 350 | B | A | First end region | B | B | B | Example |
| 13 | 560 | 510 | B | B | First end region | B | C | C | Example |
| 14 | 560 | 450 | B | A | First end region | B | B | B | Example |
| 15 | 560 | 400 | B | A | First end region | B | B | B | Example |
| 16 | 560 | 350 | B | A | First end region | B | B | B | Example |
| 17 | 560 | 510 | B | B | First end region | B | C | C | Example |
| 18 | 560 | 420 | B | A | First end region | B | B | B | Example |
| 19 | 560 | 390 | B | A | First end region | B | B | B | Example |
| 20 | 560 | 360 | B | A | First end region | B | B | B | Example |
| 21 | 560 | 350 | B | A | First end region | B | B | B | Example |
| 22 | 560 | 360 | B | A | First end region | B | B | B | Example |
| 23 | 560 | 350 | B | A | First end region | B | B | B | Example |
| 24 | 480 | 350 | B | A | First end region | B | B | B | Example |
| 25 | 560 | 450 | B | A | First end region | B | B | B | Example |

[Table 4B]

| | Hmax Hv | Hedge Hv | Quenching of joint portion | Tempering end region | Tempered region | Crack investigation result (n=6) | | | Example/ Comparative Example |
|---|---|---|---|---|---|---|---|---|---|
| | | | | | | After welding | Hydrochloric acid | Determination | |
| 26 | 690 | 530 | B | A | Second end region | B | B | B | Example |
| 27 | 690 | 480 | B | A | Second end region | B | B | B | Example |
| 28 | 690 | 430 | B | A | Second end region | B | B | B | Example |
| 29 | 690 | 530 | B | A | Second end region | B | B | B | Example |
| 30 | 690 | 480 | B | A | Second end region | B | B | B | Example |
| 31 | 690 | 430 | B | A | Second end region | B | B | B | Example |
| 32 | 690 | 530 | B | A | Second end region | B | B | B | Example |
| 33 | 690 | 480 | B | A | Second end region | B | B | B | Example |
| 34 | 690 | 430 | B | A | Second end region | B | B | B | Example |
| 35 | 750 | 560 | B | A | Second end region | B | B | B | Example |
| 36 | 770 | 580 | B | A | Second end region | B | B | B | Example |
| 37 | 690 | 620 | B | B | Second end region | B | C | c | Example |
| 38 | 690 | 690 | B | D | | D | D | D | Comparative Example |
| 39 | 690 | 480 | B | A | Second end region | B | B | B | Example |
| 40 | 690 | 480 | B | A | Second end region | B | B | B | Example |
| 41 | 590 | 390 | B | A | Second end region | B | B | B | Example |
| 42 | 590 | 390 | B | A | Second end region | B | B | B | Example |

In the manufacture of Comparative Examples 1 to 4 and Comparative Example 38, the cooling step and the second energizing step were not performed. Therefore, in the joints of Comparative Examples 1 to 4 and Comparative Example 38, neither a quenching hardened part nor a tempering softened part was confirmed. In these Comparative Examples, the evaluation results of delayed fracture resistance property after immersion in hydrochloric acid were poor.

On the other hand, as a result of performing the cooling step and the second energizing step after the projection welding, the examples in which the joint portion was quenched and tempered had excellent delayed fracture resistance property although the tensile strength of the steel sheet exceeded 1.5 GPa.

Brief Description of the Reference Symbols

    1 Projection weld joint
    11 Steel sheet
    111 Through-hole
    11a Surface (first surface)
    11b Second surface
    12 Steel member
    12a Plane
    121 Projection portion
    13 Projection weld (joint portion)
    130 End portion
    131A First end region
    131B Second end region
    132 Center region
    i Hardness measurement point

Claims

1.    A method for manufacturing a projection weld joint, comprising:

    pressing a projection portion of a steel member having the projection portion on a plane onto a surface of a hot-stamping steel sheet, wherein the hot-stamping steel sheet has an Al-based plating layer on the surface and has a tensile strength of 1.5 GPa or more;
    applying first energization to the hot-stamping steel sheet, the projection portion, and the steel member to make the projection portion serve as a projection weld;
    quenching the projection weld; and
    applying second energization to the quenched projection weld to temper edges of the projection weld while keeping a central part of the projection weld quenched.

2.    The method for manufacturing a projection weld joint according to claim 1, wherein

    in a cross section in a sheet thickness direction of the hot-stamping steel sheet, the cross section passing through a center of the tempered projection weld and a centroid of the plane,
    a maximum value of hardness at a portion having a depth of 0.3 mm from the surface of the hot-stamping steel sheet in a region up to 0.5 mm from an end portion away from the centroid of the plane of the projection weld toward the center of the projection weld is less than 95% of Hm in Equation 1, and
    a maximum value of hardness at a portion having a depth of 0.3 mm from the surface of the hot-stamping steel sheet of the projection weld is larger than 95% of Hm in Equation 1:

$$\text{Hm} = 884 \times [C] \times (1 - 0.3 \times [C]^2) + 294 \text{ (Equation 1).}$$

3.    The method for manufacturing a projection weld joint according to claim 1, wherein

    a tensile strength of the hot-stamping steel sheet is 2.0 GPa or more, and
    in a cross section in a sheet thickness direction of the hot-stamping steel sheet, the cross section passing through a center of the tempered projection weld and a centroid of the plane,
a maximum value of hardness at a portion having a depth of 0.3 mm from the surface of the hot-stamping steel sheet in a region up to 0.3 mm from an end portion away from the centroid of the plane of the projection weld toward the center of the projection weld is less than 95% of Hm in Equation 1, and
a maximum value of hardness at a portion having a depth of 0.3 mm from the surface of the hot-stamping steel sheet of the projection weld is larger than 95% of Hm in Equation 1.

4. The method for manufacturing a projection weld joint according to any one of claims 1 to 3, wherein
the first energization is applied to the hot-stamping steel sheet having a hydrogen concentration of 0.3 ppm or more, the projection portion, and the steel member.

5. The method for manufacturing a projection weld joint according to any one of claims 1 to 4, wherein

the hot-stamping steel sheet has a sheet thickness of 1.2 mm to 3.6 mm,
a time from an end of the first energization to a start of the second energization is 332 msec or more, and
a product $I2 \times t2$ of average current value I2 and energizing time t2 in the second energization is 0.5 times or more a product $I1 \times t1$ of average current value I1 and energizing time t1 in the first energization.

6. The method for manufacturing a projection weld joint according to any one of claims 1 to 5, wherein

the hot-stamping steel sheet includes a first steel sheet, a second steel sheet, and a spot-welding portion joining the first steel sheet and the second steel sheet, and
a sheet thickness of the hot-stamping steel sheet is 0.8 to 2.3 mm.

7. The method for manufacturing a projection weld joint according to any one of claims 1 to 6, wherein
third energization is applied to the hot-stamping steel sheet, the projection portion, and the steel member at a current value less than a current value at a start point of the first energization, and then the first energization is applied.

8. The method for manufacturing a projection weld joint according to claim 1 or 2, wherein

a chemical composition of a base steel sheet of the hot-stamping steel sheet contains, by mass%,
C: 0.05 to 0.70%,
Si: 2.00% or less,
Mn: 0.05 to 5.00%,
P: 0.100% or less,
S: 0.0100% or less, and
a carbon equivalent Ceq calculated by the following Equation 2 is 0.20 to 0.65 mass%:

$$Ceq = [C] + [Si]/30 + [Mn]/20 + 2 \times [P] + 4 \times [S] \text{ (Equation 2)},$$

wherein the element symbol included in Equation 2 is the content of each element included in the base steel sheet.

9. A projection weld joint, comprising: a hot-stamping steel sheet including an Al-based plating layer on a surface and having a tensile strength of 1.5 GPa or more; a steel member including a plane; and a projection weld that joins the plane and the surface, wherein,

in a cross section in a sheet thickness direction of the hot-stamping steel sheet, the cross section passing through a center of the projection weld and a centroid of the plane,
a hardness at a portion having a depth of 0.3 mm from the surface of the hot-stamping steel sheet at an end portion away from the centroid of the plane of the projection weld is less than 95% of Hm in Equation 1, and
a maximum value of hardness at a portion having a depth of 0.3 mm from the surface of the hot-stamping steel sheet of the projection weld is larger than 95% of Hm in Equation 1:

$$Hm = 884 \times [C] \times (1 - 0.3 \times [C]^2) + 294 \text{ (Equation 1)}.$$

10. The projection weld joint according to claim 9, wherein

in a cross section in a sheet thickness direction of the hot-stamping steel sheet, the cross section passing through the center of the projection weld and the centroid of the plane,
a maximum value of hardness at a portion having a depth of 0.3 mm from the surface of the hot-stamping steel sheet in a region up to 0.5 mm from an end portion away from the centroid of the plane of the projection weld toward the center of the projection weld is less than 95% of Hm in Equation 1.

11. The projection weld joint according to claim 9, wherein

the hot-stamping steel sheet has a tensile strength of 2.0 GPa or more, and
in a cross section in a sheet thickness direction of the hot-stamping steel sheet, the cross section passing through the center of the projection weld and the centroid of the plane,
a maximum value of hardness at a portion having a depth of 0.3 mm from the surface of the hot-stamping steel sheet in a region up to 0.3 mm from an end portion away from the centroid of the plane of the projection weld toward the center of the projection weld is less than 95% of Hm in Equation 1.

12. The projection weld joint according to claim 9, wherein

in a cross section in a sheet thickness direction of the hot-stamping steel sheet, the cross section passing through the center of the projection weld and the centroid of the plane,
a maximum value of hardness at a portion having a depth of 0.3 mm from the surface of the hot-stamping steel sheet in a region up to 0.5 mm from an end portion away from the centroid of the plane of the projection weld toward the center of the projection weld is less than 85% of Hm in Equation 1.

13. The projection weld joint according to claim 9, wherein

the hot-stamping steel sheet has a tensile strength of 2.0 GPa or more, and
in the cross section in the sheet thickness direction of the hot-stamping steel sheet, the cross section passing through the center of the projection weld and the centroid of the plane,
a maximum value of hardness at a portion having a depth of 0.3 mm from the surface of the hot-stamping steel sheet in a region up to 0.3 mm from an end portion away from the centroid of the plane of the projection weld toward the center of the projection weld is less than 85% of Hm in Equation 1.

14. A vehicle component comprising the projection weld joint according to any one of claims 9 to 13.

## FIG. 1A

## FIG. 1B

## FIG. 1C

## FIG. 2

## FIG. 3

FIG. 4

## INTERNATIONAL SEARCH REPORT

| International application No. |
| --- |
| **PCT/JP2023/010853** |

### A. CLASSIFICATION OF SUBJECT MATTER

***B23K 11/14***(2006.01)i; ***B23K 11/00***(2006.01)i; ***B23K 11/16***(2006.01)i; ***B23K 11/24***(2006.01)i; ***B23K 11/36***(2006.01)i; ***C21D 9/50***(2006.01)i; ***C22C 21/02***(2006.01)i; ***C22C 38/00***(2006.01)i; ***C22C 38/04***(2006.01)i; ***F16B 35/04***(2006.01)i; ***F16B 37/06***(2006.01)i

FI:  B23K11/14 310; B23K11/16 311; B23K11/00 570; B23K11/24 315; C22C38/00 301A; C22C38/04; C22C38/00 301F; C22C21/02; B23K11/24 396; F16B37/06 C; F16B35/04 G; B23K11/36 330; C21D9/50 101Z; C22C38/00 301Z

According to International Patent Classification (IPC) or to both national classification and IPC

### B. FIELDS SEARCHED

Minimum documentation searched (classification system followed by classification symbols)

B23K11/14; B23K11/00; B23K11/16; B23K11/24; B23K11/36; C21D9/50; C22C21/02; C22C38/00; C22C38/04; F16B35/04; F16B37/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 5834740 B2 (NIPPON STEEL & SUMITOMO METAL CORP.) 24 December 2015 (2015-12-24)<br>    paragraph [0096] | 1-14 |
| A | WO 2018/43099 A1 (ORIGIN ELECTRIC CO., LTD.) 08 March 2018 (2018-03-08)<br>    paragraphs [0012], [0047]-[0052] | 1-14 |
| A | JP 5708350 B2 (NIPPON STEEL & SUMITOMO METAL CORP.) 30 April 2015 (2015-04-30)<br>    paragraphs [0011], [0049], [0051] | 1-14 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **11 April 2023** | **16 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| | | | | International application No. |
| | | | | **PCT/JP2023/010853** |

| Patent document cited in search report | | | Publication date (day/month/year) | Patent family member(s) | Publication date (day/month/year) |
|---|---|---|---|---|---|
| JP | 5834740 | B2 | 24 December 2015 | (Family: none) | |
| WO | 2018/43099 | A1 | 08 March 2018 | US 2019/0061043 A1 paragraphs [0012], [0062]-[0069] JP 6055154 B1 EP 3381598 A1 CN 108698157 A KR 10-2018-0136431 A | |
| JP | 5708350 | B2 | 30 April 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022050325 A
- JP 2022201153 A
- JP 5626025 B
- JP 5613521 B
- JP 2013078784 A
- JP 2012157900 A
- JP 2004050280 A

**Non-patent literature cited in the description**

- **CEDRIC GEORGES et al.** Absorption/Desorption of Diffusible Hydrogen in Aluminized Boron Steel. *ISIJ International*, 2013, vol. 53 (8), 1295-1304